# EUROPEAN PATENT APPLICATION

(11) **EP 4 380 225 A1**
(43) Date of publication of application: **05.06.2024**
(21) Application number: 22848501.7
(22) Date of filing: 26.07.2022
(51) Int. Cl.: H04W 28/02

(54) **INFORMATION TRANSMISSION METHOD AND APPARATUS, AND RELAY TERMINAL AND NETWORK-SIDE DEVICE**

(30) Priority: 28.07.2021 CN 202110859809
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2022/107745
(87) International publication number: WO 2023/005896

(57) **Abstract**

An information transmission method, an information transmission apparatus, a relay UE and a network-side device are provided, and relates to the field of communication technology. The method includes: transmitting preset information to a network-side device, where the preset information indicates through a preset content whether the preset information is related to the relay UE or to a remote UE served by the relay UE.

## Description

### CROSS REFERENCE OF RELATED APPLICATION

The present disclosure claims a priority of Chinese patent disclosure No. 202110859809.X filed on July 28, 2021, which is incorporated herein by reference in its entirety.

### TECHNICAL FIELD

The present disclosure relates to the field of wireless technology, and in particular to an information transmission method, an information transmission apparatus, a relay UE and a network-side device.

### BACKGROUND

At present, in order to expand network coverage, a UE-to-Network relay is introduced. The relay itself can be a UE with relay functionality (also called sidelink relay). For UE-to-Network Relay, the interface between the relay and the network uses the air (Uu) interface, and the interface with the relayed UE (also called the remote UE) uses the Sidelink interface (also called direct communication interface, or bypass interface or PC5 interface). The link (Uu link) between the relay and the network may be called a backhaul link or Uu backhaul link (Uu backhaul link) for the remote UE.

For the remote UE (remote UE) that accesses the network device through the UE-to-Network relay, when the network-side device configures the remote UE to use the network scheduled resource allocation mode, due to the difference between the remote UE and the network-side device, there is no direct Uu interface between the two devices, and the relay UE is required to forward some information to the remote UE. Therefore, it is necessary to consider how the remote UE interacts with the network-side device through the relay UE to support the remote UE using the resource allocation mode of network scheduling, so that on the uplink direction, after receiving the information from the relay UE, the network-side device can correctly identify whether the information is for the relay UE or the remote UE served by the relay UE. At the same time, it can ensure that after the relay UE receives the scheduling signaling from the network-side device in the downlink direction, it can identify whether the scheduling information is for the relay UE or the remote UE served by the relay UE.

### SUMMARY

Embodiments of the present disclosure provide an information transmission method, an information transmission apparatus, a relay UE and a network-side device, to solve the following problem: in the information transmission between the relay UE and the network-side device, for the scheduling information received by the relay UE, it is not able to correctly distinguish whether the scheduling information is sent from the network-side device to a relay terminal or to a remote terminal served by a relay terminal, and it is not able to correctly distinguish whether the information received by the network-side device is from a relay terminal or a remote terminal.

In order to solve the above technical problems, embodiments of the present disclosure provide the following technical solutions:

In a first aspect, an information transmission method is provided in an embodiment of the present disclosure, performed by a relay UE and including:

transmitting preset information to a network-side device, where the preset information indicates through a preset content whether the preset information is related to the relay UE or to a remote UE served by the relay UE.

Optionally, the preset information includes at least one of the following:
a Scheduling Request (SR);
a scheduling signaling of a Uu interface sent by the network-side device;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

Optionally, when the preset information includes the SR, the preset content includes at least one of the following:
SR resources used by the SR, where different SR resources are configured corresponding to the relay UE and the remote UE; or
SR carrying indication information, where the indication information is configured to indicate whether the preset information is intended for the relay UE or the remote UE, or the indication information is configured to indicate a UE identity for which the preset information is intended.

Optionally, different SR resources are configured for different remote UEs.

Optionally, a triggering condition of the SR includes one or more of the following:
the relay UE receives the SR sent by the remote UE through the sidelink interface; where the SR sent by the remote UE is sent through a dedicated control channel of the sidelink interface;
the relay UE receives the Sidelink BSR MAC CE message sent by the remote UE through the sidelink interface;
the relay UE receives resource allocation mode configuration information for the remote UE sidelink interface, and the resource allocation mode configuration information indicates that the remote UE uses a network-scheduled resource allocation mode on the sidelink interface; or
the relay UE receives a preset instruction sent by the remote UE, the preset instruction is configured to instruct the relay UE to send an SR.

Optionally, the preset instruction is through at least one of a sidelink interface radio resource control (PC5-RRC) signaling, a sidelink interface Sidelink MAC CE information and sidelink interface Sidelink control information (SCI).

Optionally, the preset information includes the scheduling signaling of the Uu interface received from the network-side device, or includes the scheduling signaling of the sidelink interface received through the Uu interface, and the preset content includes at least one of the following:
a Radio Network Tempory Identity (RNTI) used for scheduling signaling; where the scheduling signaling for the relay UE and the scheduling signaling for the remote UE use different RNTIs respectively;
indication information carried in the scheduling information, where the indication information is configured to indicate whether the preset information is intended for the relay UE or the remote UE, or the indication information is configured to indicate the UE identity for which the preset information is intended.

Optionally, when the preset content includes the RNTI used for scheduling signaling, different RNTIs are used corresponding to the scheduling signalings of different remote UEs.

Optionally, when the preset information includes the scheduling signaling of the sidelink interface transmitted through the Uu interface, after the relay device receives the scheduling signaling of the sidelink interface transmitted through the Uu interface, when the scheduling signaling of the sidelink interface is for the remote UE served by the relay UE, the method further includes:
using at least one of the following methods to forward the received scheduling signaling to the remote UE through the sidelink interface:
using sidelink interface SCI;
using a high-level signaling of sidelink interface.

Optionally, the SCI includes at least one of the following:
an identity of the relay UE;
an identity of the remote UE; or
resources for sending a remote UE sidelink interface data and/or control information forwarded by the relay UE, which is allocated by the network-side device

Optionally, when the preset information includes the Sidelink BSR MAC CE sent to the network-side device, the preset content includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

Optionally, when the preset information includes the Sidelink BSR MAC CE sent to the network-side device, the method further includes:
obtaining a sidelink BSR sent by the remote UE through the sidelink interface with the relay UE;
according to the sidelink BSR, sending the SR to the network-side device through the Uu interface; and
after obtaining uplink resources sent by the network-side device, sending the Sidelink BSR MAC CE to the network-side device, and indicating through the preset content whether the Sidelink BSR MAC CE is related to the relay UE or to the remote UE served by the relay UE.

Optionally, when the preset information includes the sidelink interface configured grant confirmation message transmitted through the Uu interface, the sidelink interface configured grant confirmation message is sent to the network-side device through a sidelink configured grant confirmation MAC CE;
where the sidelink interface configured grant confirmation MAC CE includes indication information for indicating whether the sidelink interface configured grant confirmation message is related to the relay UE or to the remote UE served by the relay UE.

Optionally, when the preset information includes a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

Optionally, the indication information includes at least one of the following:
N-bit indication information, where a value of the N-bit indication information is used to identify whether the preset information is related to the relay UE or the remote UE; where N is an integer greater than or equal to 1; or
a UE identity, which is an identity of the relay UE or an identity of the remote UE.

In a second aspect, an information transmission method is provided in an embodiment of the present disclosure, performed by a network-side device, including:
transmitting preset information to a relay UE, where the preset information indicates through a preset content whether the preset information is related to the relay UE or to a remote UE served by the relay UE.

Optionally, the preset information includes at least one of the following:
a Scheduling Request (SR);
a scheduling signaling of a Uu interface sent by the network-side device;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

Optionally, when the preset information includes the SR, the preset content includes at least one of the following:
SR resources used by the SR, where different SR resources are configured corresponding to the relay UE and the remote UE; or
SR carrying indication information, where the indication information is configured to indicate whether the preset information is intended for the relay UE or the remote UE, or the indication information is configured to indicate a UE identity for which the preset information is intended.

Optionally, the preset information includes the scheduling signaling of the Uu interface received from the network-side device, or includes the scheduling signaling of the sidelink interface received through the Uu interface, and the preset content includes at least one of the following:
a Radio Network Tempory Identity (RNTI) used for scheduling signaling; where the scheduling signaling for the relay UE and the scheduling signaling for the remote UE use different RNTIs respectively;
indication information carried in the scheduling information, where the indication information is configured to indicate whether the preset information is intended for the relay UE or the remote UE, or the indication information is configured to indicate the UE identity for which the preset information is intended.

Optionally, the method further includes configuring the RNTI used by the remote UE in at least one of the following methods:
through a RRC reconfiguration of the Uu interface, sending the RNTI configured for the remote UE to the remote UE;
sending the RNTI configured for the remote UE to the remote UE through an end-to-end RRC signaling, and the remote UE sending the RNTI to the relay UE through the sidelink interface.

Optionally, when the preset information includes the Sidelink BSR MAC CE sent to the network-side device, the preset content includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

Optionally, when the preset information includes the sidelink interface configured grant confirmation message transmitted through the Uu interface, the sidelink interface configured grant confirmation message is obtained through a sidelink configured grant confirmation MAC CE;
where the sidelink interface configured grant confirmation MAC CE includes indication information for indicating whether the sidelink interface configured grant confirmation message is related to the relay UE or to the remote UE served by the relay UE.

Optionally, when the preset information includes a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

In a third aspect, a relay UE is provided in an embodiment of the present disclosure, including a memory, a transceiver, and a processor:
a memory is configured to store a computer program; a transceiver is configured to transmit and receive data under a control of the processor; and the processor is configured to read the computer program in the memory to perform:
transmitting preset information to a network-side device, where the preset information indicates through a preset content whether the preset information is related to the relay UE or to a remote UE served by the relay UE.

Optionally, the preset information includes at least one of the following:
a Scheduling Request (SR);
a scheduling signaling of a Uu interface sent by the network-side device;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

Optionally, when the preset information includes the SR, the preset content includes at least one of the following:
SR resources used by the SR, where different SR resources are configured corresponding to the relay UE and the remote UE; or
SR carrying indication information, where the indication information is configured to indicate whether the preset information is intended for the relay UE or the remote UE, or the indication information is configured to indicate a UE identity for which the preset information is intended.

Optionally, different SR resources are configured for different remote UEs.

Optionally, ta triggering condition of the SR includes one or more of the following:
the relay UE receives the SR sent by the remote UE through the sidelink interface; where the SR sent by the remote UE is sent through a dedicated control channel of the sidelink interface;
the relay UE receives the Sidelink BSR MAC CE message sent by the remote UE through the sidelink interface;
the relay UE receives resource allocation mode configuration information for the remote UE sidelink interface, and the resource allocation mode configuration information indicates that the remote UE uses a network-scheduled resource allocation mode on the sidelink interface; or
the relay UE receives a preset instruction sent by the remote UE, the preset instruction is configured to instruct the relay UE to send an SR.

Optionally, the preset instruction is through at least one of a sidelink interface radio resource control (PC5-RRC) signaling, a sidelink interface Sidelink MAC CE information and sidelink interface Sidelink control information (SCI).

Optionally, the preset information includes the scheduling signaling of the Uu interface received from the network-side device, or includes the scheduling signaling of the sidelink interface received through the Uu interface, and the preset content includes at least one of the following:
a Radio Network Tempory Identity (RNTI) used for scheduling signaling; where the scheduling signaling for the relay UE and the scheduling signaling for the remote UE use different RNTIs respectively;
indication information carried in the scheduling information, where the indication information is configured to indicate whether the preset information is intended for the relay UE or the remote UE, or the indication information is configured to indicate the UE identity for which the preset information is intended.

Optionally, when the preset content includes the RNTI used for scheduling signaling, different RNTIs are used corresponding to the scheduling signalings of different remote UEs.

Optionally, when the preset information includes the scheduling signaling of the sidelink interface transmitted through the Uu interface, after the relay device receives the scheduling signaling of the sidelink interface transmitted through the Uu interface, when the scheduling signaling of the sidelink interface is for the remote UE served by the relay UE, the processor is configured to read the computer program in the memory to perform:
using at least one of the following methods to forward the received scheduling signaling to the remote UE through the sidelink interface:
using sidelink interface SCI;
using a high-level signaling of sidelink interface.

Optionally, the SCI includes at least one of the following:
an identity of the relay UE;
an identity of the remote UE; or
resources for sending a remote UE sidelink interface data and/or control information forwarded by the relay UE, which is allocated by the network-side device

Optionally, when the preset information includes the Sidelink BSR MAC CE sent to the network-side device, the preset content includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

Optionally, when the preset information includes the Sidelink BSR MAC CE sent to the network-side device, the method further includes:
obtaining a sidelink BSR sent by the remote UE through the sidelink interface with the relay UE;
according to the sidelink BSR, sending the SR to the network-side device through the Uu interface; and
after obtaining uplink resources sent by the network-side device, sending the Sidelink BSR MAC CE to the network-side device, and indicating through the preset content whether the Sidelink BSR MAC CE is related to the relay UE or to the remote UE served by the relay UE.

Optionally, when the preset information includes the sidelink interface configured grant confirmation message transmitted through the Uu interface, the sidelink interface configured grant confirmation message is sent to the network-side device through a sidelink configured grant confirmation MAC CE;
where the sidelink interface configured grant confirmation MAC CE includes indication information for indicating whether the sidelink interface configured grant confirmation message is related to the relay UE or to the remote UE served by the relay UE.

Optionally, when the preset information includes a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

Optionally, the indication information includes at least one of the following:
N-bit indication information, where a value of the N-bit indication information is used to identify whether the preset information is related to the relay UE or the remote UE; where N is an integer greater than or equal to 1; or
a UE identity, which is an identity of the relay UE or an identity of the remote UE.

In a fourth aspect, an network-side device is provided in an embodiment of the present disclosure, including a memory, a transceiver, and a processor:
a memory is configured to store a computer program; a transceiver is configured to transmit and receive data under a control of the processor; and the processor is configured to read the computer program in the memory to perform:
transmitting preset information to a relay UE, where the preset information indicates through a preset content whether the preset information is related to the relay UE or to a remote UE served by the relay UE.

Optionally, the preset information includes at least one of the following:
a Scheduling Request (SR);
a scheduling signaling of a Uu interface sent by the network-side device;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

In a fifth aspect, an information transmission apparatus is provided in an embodiment of the present disclosure, performed by a relay UE, including:
a first transmission module, configured to transmit preset information to a network-side device, where the preset information indicates through a preset content whether the preset information is related to the relay UE or to a remote UE served by the relay UE.

In a sixth aspect, an information transmission apparatus is provided in an embodiment of the present disclosure, performed by a network-side device, including:
a second transmission module, configured to transmit preset information to a relay UE, where the preset information indicates through a preset content whether the preset information is related to the relay UE or to a remote UE served by the relay UE.

In a seventh aspect, a processor-readable storage medium, where the processor-readable storage medium stores a computer program, the computer program is configured to cause the processor to perform the information transmission method hereinabove.

According to the embodiments of the present disclosure, when transmitting preset information between the relay UE and the network-side device, it is able to indicate through a preset content whether the preset information is related to a relay UE or related to a remote UE served by a relay UE, so that the relay UE receives the scheduling information and can correctly identify whether the scheduling information is sent by the network-side device to the relay UE or the remote UE served by the relay UE, and distinguish whether the information received by the network-side device is from a relay UE or a remote UE.

### BRIEF DESCRIPTION OF THE DRAWINGS

In order to more clearly illustrate the technical solutions in the embodiments of the present disclosure or related technologies, the drawings needed to be used in the description of the embodiments or related technologies will be briefly introduced below. Obviously, the drawings in the following description are only for the purpose of describing the embodiments or related technologies. For some embodiments described in the disclosure, those of ordinary skill in the art can also obtain other drawings based on these drawings without exerting any creative effort.
Fig. 1 is a structural view of a network system for an embodiment of the present disclosure;
Fig. 2 is a schematic view of the communication method of centralized network control provided by the present disclosure;
Fig. 3 is a schematic view of a sidelink provided by the present disclosure;
Fig. 4 is a schematic view of a relay from the UE to the network-side device provided by the present disclosure;
Fig. 5 is a schematic view of the L2 UE-to-Network relay user plane protocol stack provided by the present disclosure;
Fig. 6 is a schematic flowchart of an information transmission method for a relay UE according to an embodiment of the present disclosure;
Fig. 7 is a first specific flowchart of information transmission according to the embodiment of the present disclosure;
Fig. 8 is a second specific flowchart of information transmission according to the embodiment of the present disclosure;
Fig. 9 is a third specific flowchart of information transmission according to the embodiment of the present disclosure;
Fig. 10 is a fourth specific flowchart of information transmission according to the embodiment of the present disclosure;
Fig. 11 is a fifth specific flowchart of information transmission according to the embodiment of the present disclosure;
Fig. 12 is a sixth specific flowchart of information transmission according to the embodiment of the present disclosure;
Fig. 13 is a first schematic view of the MAC CE format according to an embodiment of the present disclosure;
Fig. 14 is a second schematic view of the MAC CE format according to the embodiment of the present disclosure;
Fig. 15 is a schematic flowchart of an information transmission method for network-side devices according to an embodiment of the present disclosure;
Fig. 16 is a schematic structural view of an information transmission apparatus for a relay UE according to an embodiment of the present disclosure;
Fig. 17 is a structural view of a UE according to an embodiment of the present disclosure;
Fig. 18 is a schematic structural view of an information transmission apparatus for network-side device according to an embodiment of the present disclosure; and
Fig. 19 is a structural view of a network-side device according to an embodiment of the present disclosure.

### DETAILED DESCRIPTION

In the embodiments of the present disclosure will be clearly and completely described below with reference to the accompanying drawings in the embodiments of the present disclosure. Obviously, the described embodiments are part of the embodiments of the present disclosure, rather than all of the embodiments. Based on the embodiments in this disclosure, all other embodiments obtained by those of ordinary skill in the art without making creative efforts fall within the scope of protection of this disclosure.

The present disclosure are intended to distinguish similar objects and are not necessarily intended to describe a specific order or sequence. It is to be understood that the data so used are interchangeable under appropriate circumstances so that the embodiments of the disclosure described herein may be implemented, for example, in sequences other than those illustrated or described herein. In addition, the terms "including" and "having" and any variations thereof are intended to cover non- exclusive inclusions, e.g., a process, method, system, product, or apparatus that encompasses a series of steps or units and need not be limited to those explicitly listed. Those steps or elements may instead include other steps or elements not expressly listed or inherent to the process, method, product or apparatus.

In the embodiment of the present disclosure, the term "and/or" describes the association relationship of associated objects, indicating that there can be three relationships, for example, A and/or B, which can mean: A exists alone, A and B exist simultaneously, and B exists alone. The character "/" generally indicates that the related objects are in an "or" relationship. In the embodiment of this disclosure, the term "plurality" refers to two or more than two, and other quantifiers are similar to it.

In the embodiments of the present disclosure, words such as "exemplary" or "such as" are intended to represent examples, illustrations or explanations. Any embodiment or design described as "exemplary" or "such as" in the present disclosure is not intended to be construed as preferred or advantageous over other embodiments or designs. Rather, use of the words "exemplary" or "such as" is intended to present the concept in a concrete manner.

Embodiments of the present disclosure are described in the following with reference to the accompanying drawings. The information transmission method, device, relay UE and network-side device provided by the embodiments of the present disclosure may be applied in a wireless communication system. The wireless communication system may be a system using fifth generation (5th Generation, 5G) mobile communication technology (hereinafter referred to as the 5G system). Those skilled in the field can understand that the 5G NR system is only an example and is not a limitation.

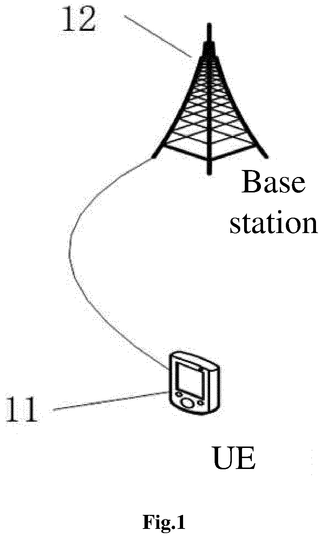

Referring to Fig. 1, Fig. 1 is a structural view of a network system to which embodiments of the present disclosure are applicable. As shown in Fig. 1, it includes a user UE 11 and a base station 12. The user UE 11 can be a user equipment (UE), for example: it can be a mobile phone, tablet computer (Tablet Personal Computer), laptop computer (Laptop Computer), personal digital assistant (Personal Digital Assistant, PDA), mobile Internet device (Mobile Internet Device, MID) or Wearable Device and other UE-side devices. It should be noted that the specific type of the user UE 11 is not limited in the embodiment of the present disclosure. The above-mentioned base station 12 may be a base station of 5G and later versions (for example: gNB, 5G NR NB), or a base station in other communication systems, or called a Node B. It should be noted that in the embodiment of the present disclosure, only 5G A base station is taken as an example, but the specific type of the base station 12 is not limited.

First, some concepts related to the embodiments of the present disclosure are described as follows.

### Cellular network communication:

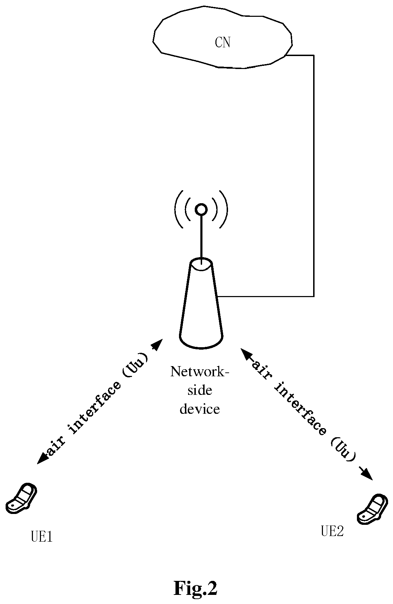

Please refer to Fig. 2, the traditional wireless communication uses cellular network communication, that is, the UE and the network-side device transmit uplink and downlink data or control information through the Uu interface.

### Sidelink:

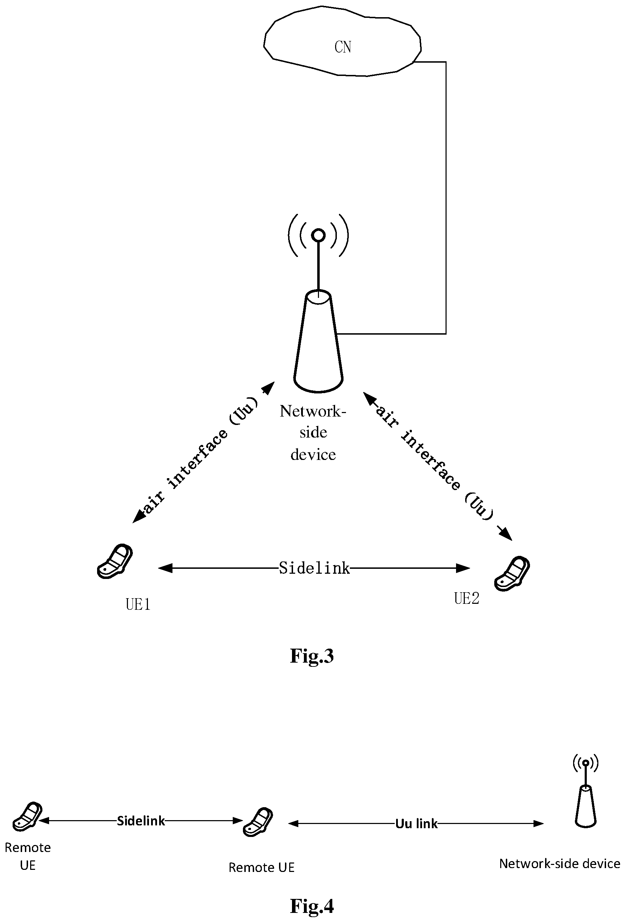

Please refer to Fig. 3. The sidelink method refers to a method in which adjacent UEs can transmit data through a sidelink link (also called Sidelink or PC5) within a short range. The wireless interface corresponding to the Sidelink link is called the sidelink interface (Sidelink interface or PC5 interface).

The sidelink interface supports two resource allocation methods:
The resource allocation method of network scheduling (also called mode 1): that is, the network-side device allocates resources for the UE to send data on the sidelink interface;
Terminal-selected resource allocation mode (also called mode 2): The UE selects sidelink transmission resources from the resource pool available on the sidelink interface.

For the resource allocation method of network scheduling, the UE needs to send a scheduling request (Scheduling request) to the network-side device through the Uu interface. Request, SR), the network-side device allocates Uu interface resources to the UE, and then the UE uses the Uu interface resources to send a sidelink link buffer status report (Sidelink Buffer Status Reporting, Sidelink BSR). Then the network-side device based on Sidelink The BSR allocates sidelink interface resources to the UE.
relay:
In order to expand network coverage, you can consider introducing a relay from the UE to the network-side device (UE-to-Network relay). The relay itself can be a UE with relay functionality (also known as Sidelink relay). For UE-to-Network relay, the interface between the relay and the network-side device uses the Uu interface, and the relay and the relayed UE (also called the remote UE Remote The interface between UE) uses the Sidelink interface (also known as the sidelink interface, or bypass interface or PC5 interface). The link (Uu link) between the relay and the network-side device may be called a backhaul link (Backhaul link or Uu backhaul link) for the remote UE. The schematic view of the relay from the UE to the network-side device is shown in Fig. 4.

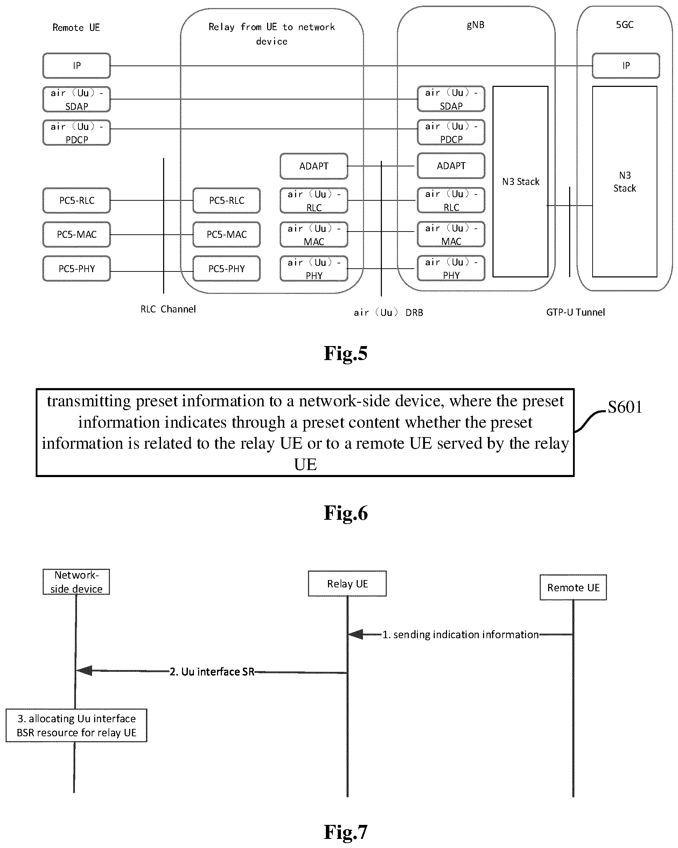

UE-to-Network relay is divided into L2 UE-to-Network relay and L3 UE-to-Network relay according to different protocol stack architectures. Among them, the L2 UE-to-Network relay user plane protocol stack is shown in Fig. 5.
stack shown in Fig. 5, in the L2 UE-to-Network relay scenario, the bearer or data radio bearer (data radio bearer (DRB) is end-to-end (that is, established directly between remote UE and gNB), and the bottom layer, such as Radio Link Control (RLC), medium access control (MAC), port The physical layer (Port Physical Layer) is hop by hop.

Bearers in relay scenarios are divided into three categories:
Sidelink bearer: that is, the bearer between the remote UE and the relay UE;
end-to-end bearer between the remote UE and the network-side device; that is, the end-to-end bearer established between the remote UE and the network-side device;
The remote device carries the Uu interface backhaul link: that is, the bearer used to carry remote UE data between the relay UE and the network-side device.

No matter what type of bearer it is, there is a one-to-one correspondence between the bearer and the logical channel, and the logical channel has a corresponding logical channel identity.

Embodiments of the present disclosure provide an information transmission method and device to solve the following problem: in the information transmission between the relay UE and the network-side device, for the scheduling information received by the relay UE, it is not able to correctly distinguish whether the scheduling information is sent from the network-side device to a relay terminal or to a remote terminal served by a relay terminal, and it is not able to correctly distinguish whether the information received by the network-side device is from a relay terminal or a remote terminal.

Among them, the method and the device are based on the same application concept. Since the principles of the method and the device to solve the problem are similar, the implementation of the device and the method can be referred to each other, and the repeated details will not be repeated.

As shown in Fig. 6, an embodiment of the present disclosure provides an information transmission method, which is performed by a relay UE. The method includes:
S601: transmitting preset information to a network-side device, where the preset information indicates through a preset content whether the preset information is related to the relay UE or to a remote UE served by the relay UE.

According to the above, using this method, the preset information is distinguished by preset content whether it is related to the relay UE or to the remote UE served by the relay UE.

In the embodiment of the present disclosure, when the relay UE and the network device interact with the preset information, it is necessary to distinguish whether the preset information is for the relay UE itself or for the remote UE served by the relay UE according to the preset content.

According to the transmission method of the present disclosure, it is able to distinguish whether the preset information is for the relay UE or the remote UE served by the relay UE through the preset content when transmitting preset information between the relay UE and the network-side device, thereby ensuring that the network-side device in the uplink direction can correctly identify whether the information is for the relay UE or the remote UE served by the relay UE after receiving the information from the relay UE. It can also ensure that the relay UE in the downlink direction can correctly identify whether the information is for the relay UE or the remote UE served by the relay UE. After receiving the scheduling signaling, the network-side device can identify whether the scheduling information is for the relay UE or the remote UE served by the relay UE.

Optionally, the preset information includes at least one of the following:
a Scheduling Request (SR);
a scheduling signaling of a Uu interface sent by the network-side device ;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

In this embodiment of the present disclosure, the preset information includes but is not limited to one or a combination of the following information:
a Scheduling Request (SR);
a scheduling signaling for the Uu interface of the relay UE received from the network-side device by the relay terminal;
a Sidelink Buffer Status Reporting Medium Access Control Control Element (Sidelink BSR MAC CE);
a scheduling signaling for the sidelink interface of relay UE and/or remote UE received from the network-side device by the relay terminal through the Uu interface;
a sidelink interface configured grant confirmation message transmitted through a Uu interface.

Optionally, when the preset information includes SR, the preset content includes at least one of the following, that is, whether the SR is related to the relay UE or to the relay UE is distinguished by at least one of the following preset content. The above description is related to the remote UE served by the relay UE. It can also be said that it is for the relay UE or for the remote UE served by the relay UE:
SR resources used by the SR, where different SR resources are configured corresponding to the relay UE and the remote UE; or
SR carrying indication information, where the indication information is configured to indicate whether the preset information is intended for the relay UE or the remote UE, or the indication information is configured to indicate a UE identity for which the preset information is intended.

In the embodiment of the present disclosure, if the preset information includes SR, when the relay UE sends the SR to the network-side device, it needs to distinguish whether the SR is for the relay UE itself or for the remote UE served by the relay UE. Specifically, the differentiation method can be one or a combination of the following:
distinguishing or indicating through the SR resources used by the relay UE; when the network-side device configures SR resources, the SR resource configurations for the relay UE and the remote UE are configured separately;
SR carrying indication information, and the indication information is configured to distinguish whether the SR is for the relay UE itself or for the remote UE served by the relay UE, or the indication information is configured to indicate the UE identity for which the preset information is intended; the UE identity is an identity of a relay UE or an identity of a remote UE serving the relay UE.

Optionally, different SR resources are configured for different remote UEs served by the relay terminal.

In the embodiment of the present disclosure, when the SR resource used by the relay UE indicates whether the SR is for the relay UE itself or for the remote UE served by the relay UE, if the relay UE serves multiple remote UEs, different The SR resources of the remote UE also need to be configured separately.

Optionally, the triggering conditions for SR include one or more of the following:
the relay UE receives the SR sent by the remote UE through the sidelink interface; where the SR sent by the remote UE is sent through a dedicated control channel of the sidelink interface;
the relay UE receives the Sidelink BSR MAC CE message sent by the remote UE through the sidelink interface;
the relay UE receives resource allocation mode configuration information for the remote UE sidelink interface, and the resource allocation mode configuration information indicates that the remote UE uses a network-scheduled resource allocation mode on the sidelink interface; or
the relay UE receives a preset instruction sent by the remote UE, the preset instruction is configured to instruct the relay UE to send an SR.

In the embodiment of the present disclosure, if the SR sent by the relay UE to the network-side device is for the remote UE served by the relay UE, that is, related to the remote UE served by the relay UE, then the triggering condition of the SR is the indication information received by the UE from the remote UE, the indication information may be, but is not limited to, one or a combination of the following:
sidelink Physical Uplink Control Channel (SL-PUCCH)) for carrying the SR of the remote UE is introduced into the sidelink interface, and the relay UE receives information from the remote UE through the dedicated control channel SR request sent;
Sidelink BSR MAC CE is newly introduced on the sidelink interface, and the relay UE receives the Sidelink BSR MAC CE message sent by the remote UE;
the relay UE receives from the remote UE or the network-side device the resource allocation mode configuration information used by the remote UE sidelink interface, and the resource allocation mode configuration information instructs the remote UE to use the resource allocation mode scheduled by the network on the sidelink interface;
the relay UE receives a preset instruction from the remote UE. Optionally, the preset instruction may be N bit indication information, and the preset instruction is configured to instruct the relay UE to send an SR. N is a positive integer greater than or equal to 1.

Optionally, the preset instruction is sent through at least one of sidelink interface radio resource control (PC5-RRC) signaling, sidelink interface Sidelink MAC CE information and sidelink interface Sidelink control information (SCI).

In the embodiment of the present disclosure, the N bit indication information received by the relay UE from the remote UE can be carried through the sidelink interface radio resource control (PC5-RRC) signaling, the sidelink interface Sidelink. MAC CE (PC5 MAC CE) information and sidelink interface Sidelink control information (system control information, SCI) (PC5 SCI).

The following is a detailed description of the information transmission process provided by the embodiment of the present disclosure when the preset information is SR with reference to FIG. 7.

Step 1: The remote UE sends indication information to the relay UE. The indication information is configured to trigger the relay UE to send an SR to the network-side device. The content of the specific instruction information can be one or a combination of the following:
the sidelink interface introduces a control channel (such as SL-PUCCH) used to carry the SR of the remote UE, and the remote UE sends an SR request to the relay UE through the control channel;
the sidelink interface introduces Sidelink BSR MAC CE, and the remote UE sends Sidelink BSR MAC CE to the relay UE through the sidelink interface;
the remote UE sends the remote UE sidelink interface resource allocation mode indication information to the relay UE. Optionally, the resource allocation mode indication information is only sent when the remote UE uses the resource allocation mode scheduled by the network;

The relay UE receives N bit indication information from the remote UE. The N bit indication information can be carried through PC5-RRC signaling, PC5 MAC CE, or PC5 SCI.

It should be noted that step 1 is an optional step.

Step 2: The relay UE sends SR to the Uu interface.

Relay UE determines whether the SR is triggered. If the SR is triggered, the SR is sent to the network device through the Uu interface. The SR is configured to request Uu interface resources from the network-side device.

If the SR sent by the relay UE to the network-side device is directed to the relay UE itself, the SR trigger condition follows the SR trigger condition in the protocol in the related art.

If the SR sent by the relay UE to the network-side device is directed to the remote UE served by the relay UE, the triggering condition of the SR can be one or a combination of the following:
the control channel (e.g., SL-PUCCH) used to carry the SR of the remote UE is introduced into the sidelink interface, and the relay UE receives the SR request sent by the remote UE through the control channel;
the Sidelink BSR MAC CE is introduced into the sidelink interface, and the relay UE receives the Sidelink BSR MAC CE sent by the remote UE;
the relay UE receives from the remote UE or the network-side device the resource allocation mode configuration information used by the remote UE sidelink interface, and the resource allocation mode configuration information instructs the remote UE to use the resource allocation mode scheduled by the network on the sidelink interface.
the relay UE sends an SR to the network-side device, it needs to indicate whether the SR request is for the relay UE itself or for the remote UE served by the relay UE, that is, whether the SR is related to the relay UE or to the remote UE served by the relay UE. The specific instruction method can be one or a combination of the following:
   using the SR resources used by the relay UE, when the network-side device configures SR resources, the SR resource configurations for the relay UE and the remote UE are configured separately; further, if the relay UE serves multiple remote UEs, the SR resources of different remote UEs are also needed to be configured separately;
   the SR carries instruction information and is performed through the instruction information. The indication information may be but is not limited to one of the following:
      Nbit indication information is configured to indicate whether the SR is for the relay UE or the remote UE; N is an integer greater than or equal to 1, for example, it can be 1;
      the identity information of the relay UE and/or the identity information of the remote UE.

Step 3: the network-side device receives Uu interface resources allocated to the relay UE by the SR.

This resource can be used to carry the Sidelink BSR MAC CE of the relay UE itself, or can be used to carry the Sidelink BSR MAC CE of the remote UE.

Optionally, when the preset information includes the scheduling signaling of the Uu interface sent by the network-side device, or includes the scheduling signaling of the sidelink interface transmitted through the Uu interface, the preset content includes at least one of the following: that is, at least one of the following preset contents is configured to indicate whether the preset information is for the relay UE or for the remote UE served by the relay UE. It can also be said that at least one of the following preset contents is used to indicate whether the scheduling signaling is related to the relay UE or the remote UE served by the relay UE:
the Radio Network Tempory Identity (RNTI) used for scheduling signaling; where the scheduling signaling for the relay UE and the scheduling signaling for the remote UE use different RNTIs respectively;
the indication information carried in the scheduling information is configured to indicate whether the preset information is for a relay UE or a remote UE, or the indication information is configured to indicate a UE identity for which the preset information is intended.

In the embodiment of the present disclosure, if the preset information refers to the scheduling signaling for the Uu interface of the relay UE received by the relay UE from the network-side device, the relay UE can distinguish, according to the scheduling signaling, the Uu interface resource allocated by the scheduling signaling is used to carry the relay UE's own Uu interface data and/or control information, or used to carry the Sidelink BSR MAC CE of the remote UE served the relay UE. The specific differentiation methods can be:
distinguishing through the Radio Network Tempory Identity (RNTI) used by the scheduling signaling, distinguishing by RNTIs used by the relay UE and the remote UE served by the relay UE. Furthermore, the RNTI used by the remote UE is allocated by the network-side device, and: Yes Controlled by the network-side device through the Uu interface wireless resource (Radio Resource Control, RRC) reconfiguration notification is sent to the remote UE, or the network-side device notifies the remote UE through end-to-end RRC signaling, and then the remote UE sends it to the relay UE through the sidelink interface;
distinguishing based on the indication information carried in the scheduling signaling.

If the preset information refers to the scheduling signaling for the sidelink interface of the relay terminal and/or the remote terminal received by the relay terminal from the network side device, then the relay terminal receives the scheduling signaling for the sidelink interface sent by the network side device to the relay terminal. Regarding the scheduling signaling of the sidelink interface, according to the scheduling signaling, it can be distinguished whether the sidelink interface resources allocated by the scheduling signaling are for the relay terminal itself or for the remote terminal served by the relay terminal. The specific distinction is The mode and preset information refer to when the relay terminal receives the scheduling signaling for the Uu interface of the relay terminal from the network side device, the relay terminal distinguishes according to the scheduling signaling whether the Uu interface resources allocated by the scheduling signaling are used for carrying The relay terminal's own Uu interface data and/or control information are distinguished in the same way as the Sidelink BSR MAC CE of the remote terminal used to carry the relay terminal service.

Optionally, different RNTIs are used for scheduling signaling corresponding to different remote UEs.

In the embodiment of the present disclosure, the RNTI used in the scheduling signaling is configured to distinguish whether the sidelink interface resources allocated by the scheduling signaling are for the relay UE itself or for the remote UE served by the relay UE. For different remote UEs, the RNTIs also needs to be distinguished.

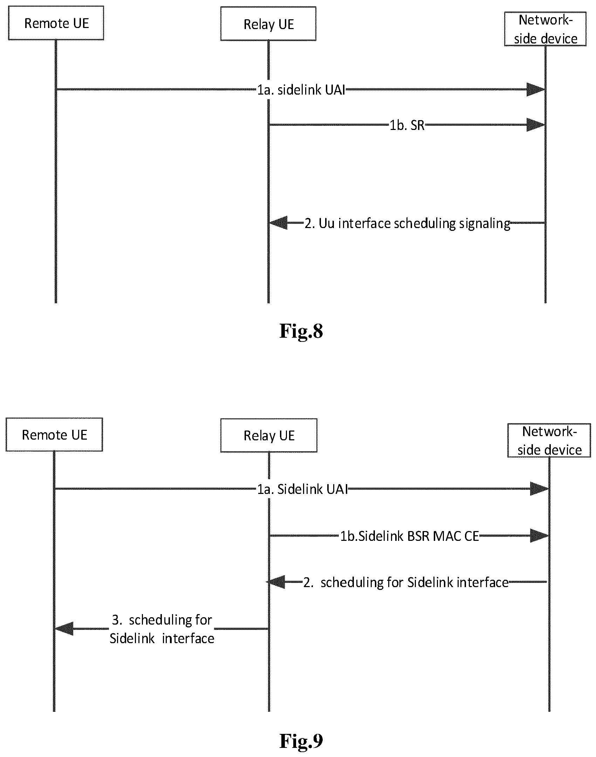

The following is a detailed description of the information transmission process provided by the embodiment of the present disclosure when the preset information is the scheduling signaling of the Uu interface sent by the network-side device with reference to FIG. 8.

Step 1: The network-side device receives the SR from the relay UE. The sending process of the SR request is the same as the sending process of the SR request when the preset information is SR.

Sidelink UE assistance information (UE Assistance Information, UAI) can be transmitted using end-to-end RRC signaling between the remote UE and the network-side device.

Step 2: The network-side device sends Uu interface scheduling signaling to the relay UE.

According to the scheduling signaling, the relay UE can distinguish whether the Uu interface resources allocated by the scheduling signaling are used to carry the relay UE's own Uu interface data and / or control information, or whether they are used to carry the Sidelink BSR MAC CE of the remote UE served by the relay UE. The specific distinguishig method can be:
The RNTI used in scheduling signaling is used to differentiate. Different RNTIs are used for relay terminals and remote terminals served by relay terminals, such as Cell-Radio Network Temporary Identifier (C-RNTI). Further, the RNTI used by the remote terminal is allocated by the network side device, and is notified to the remote terminal by the network side device through RRC reconfiguration of the Uu interface, or the network side device notifies the remote terminal through end-to-end RRC signaling, and then the remote terminal notifies the relay terminal through the sidelink interface;
The distinguishing is made by the indication information carried in the scheduling signaling. The specific indication information may include but is not limited to one of the following:
   1 bit indication information, used to identify whether the scheduling signaling is for the relay UE or the remote UE through the value of the 1 bit indication information, that is, indicating whether the scheduling signaling is related to the relay UE or the remote UE;
   the identity information of the relay UE and/or the identity information of the remote UE carried in the scheduling signaling.

Optionally, when the preset information includes the scheduling signaling of the sidelink interface transmitted through the Uu interface, after the relay device receives the scheduling signaling of the sidelink interface transmitted through the Uu interface, when the scheduling signaling of the sidelink interface is for the remote UE served by the relay UE, the method further includes:

using at least one of the following methods to forward the received scheduling signaling to the remote UE through the sidelink interface:
using sidelink interface SCI;
using a high-level signaling of sidelink interface.

In the embodiment of the present disclosure, the relay UE receives the scheduling signaling for the sidelink interface from the network-side device. If the scheduling signaling is for the remote UE served by the relay UE, the relay UE needs to pass the sidelink interface Forward scheduling signaling to the remote UE. The specific signaling method includes one or a combination of the following:
introducing a new SCI in the sidelink interface. The new SCI is different from the sidelink interface SCI in related art, and is configured to allocate sidelink interface transmission resources to remote UEs;
High-level signaling transmission through sidelink interface (such as PC5-RRC signaling or Sidelink MAC CE).

Optionally, the SCI includes at least one of the following:
an identity of the relay UE;
an identity of the remote UE;
resources for sending a remote UE sidelink interface data and/or control information forwarded by the relay UE, which is allocated by the network-side device.

In the embodiment of the present disclosure, the new SCI introduced by the sidelink interface at least includes one of: relay UE identity information, remote UE identity information, remote UE sidelink interface data and/or resources used for sending control information.

Referring to Fig.9, the following is a detailed description of the information transmission provided by the embodiment of the present disclosure when the preset information is the scheduling signaling for the relay UE sidelink interface and/or the remote UE received by the relay UE from the network-side device, process.

Step 1: 1a. the network-side device receives Sidelink UE assistance information (UE AssistanceInformation, UAI) from the remote UE; or, lb. The network-side device receives Sidelink BSR MAC CE from the relay UE.

Sidelink UAI transmission can use end-to-end RRC signaling transmission between the remote UE and the network-side device.

The Sidelink BSR MAC CE can carry the identity information of the corresponding UE. The identity information of the UE can be the UE identity information (Identity document, ID) or the index information of the UE, or the Sidelink BSR MAC CE carries the identity information of one or more UEs., the identity information of the UE may be the UE ID or the index information of the UE.

It should be noted that step 1 is an optional step. If you choose to use step 1, select one of step 1a and step 1b.

Step 2: The relay UE receives scheduling signaling for the sidelink interface from the network-side device.

The relay UE receives the scheduling signaling for the sidelink interface from the network-side device. According to the scheduling signaling, it can be distinguished whether the sidelink interface resources allocated by the scheduling signaling are for the relay UE itself or for the remote UE served by the relay UE. The specific distinguishing method can be:
distinguish by the RNTI used in scheduling signaling. Different RNTIs are used for relay UEs and remote UEs served by relay UEs, such as Sidelink Radio Temporary Identifier. Network Temporary Identifier, SL-RNTI) to distinguish. Further, the RNTI used by the remote UE is allocated by the network, and: a network-side device notifies the remote UE through Uu interface RRC reconfiguration, or the network-side device notifies the remote UE through end-to-end RRC signaling The UE is then notified by the remote UE to the relay UE through the sidelink interface;

The distinguishing is made by the indication information carried in the scheduling signaling. The specific indication information may be but is not limited to one of the following:
N bit indication information, such as 1 bit indication information, is configured to indicate whether the scheduling signaling is for the relay UE or the remote UE; the identity information of the relay UE and/or the identity information of the remote UE carried in the scheduling signaling.

Step 3: the relay UE sends a sidelink interface scheduling instruction to the remote UE.

It should be noted that step 3 is used only when the relay UE receives from the network-side device in step 2 the sidelink interface scheduling signaling sent by the network-side device for the remote UE.

The relay UE receives the scheduling signaling for the sidelink interface from the network-side device. If the scheduling signaling is for the remote UE served by the relay UE, the relay UE needs to forward the scheduling information to the remote UE through the sidelink interface. The specific signaling method is one of the following:
introducing a new SCI into the sidelink interface. This new SCI is different from the sidelink interface SCI in related technologies. Its function is to allocate sidelink interface transmission resources to remote UEs. The new SCI includes at least one of the following: the identity information of the relay UE, the identity information of the remote UE, the resources used by the remote UE to send sidelink interface data and / or control information;
transmitting by the communication interface high-level signaling transmission (such as PC5 -RRC signaling or Sidelink MAC CE).

Optionally, when the preset information includes the Sidelink BSR MAC CE sent to the network-side device, the preset content includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

The identity of the UE carried is the identity of the relay UE, or the identity of the remote UE served by the relay UE.

In this disclosed embodiment, if the preset information refers to the Sidelink BSR MAC CE, the relay UE sends the Sidelink BSR MAC CE to the network-side device, and the Sidelink BSR MAC CE can indicate that the Sidelink BSR MAC CE comes from the relay UE's own sidelink interface. The buffer status information is also the buffer status information of the remote UE sidelink interface. The preset content of specific instructions includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries one or more UE identity corresponding to buffer status information.

Optionally, when the preset information includes the Sidelink BSR MAC CE sent to the network-side device, the method further includes:
the Sidelink BSR sent by the remote UE through the sidelink interface with the relay UE;
according to the Sidelink BSR, sending a scheduling request SR to the network-side device through the Uu interface;
after obtaining the uplink resources sent by the network-side device, the Sidelink BSR MAC CE is sent to the network-side device, and the preset content is configured to indicate whether the Sidelink BSR MAC CE is related to the relay UE or to the remote UE served by the relay UE.

In the embodiment of the present disclosure, if the preset information refers to the Sidelink BSR MAC CE sent to the network-side device, and also includes the remote UE being triggered by Sidelink BSR, then through sidelink between the remote UE and the relay UE The interface sends Sidelink BSR to the relay UE, and the relay UE receives the Sidelink BSR sent by the remote UE, triggers the Uu interface to initiate SR. The SR resources of the relay UE and the remote UE do not need to be distinguished.

The relay UE obtains the Uu interface uplink resources from the network-side device. The relay UE sends the Sidelink BSR MAC CE to the network-side device. The Sidelink BSR MAC CE can distinguish the buffer status information of the relay UE's own sidelink interface from the sidelink of the remote UE. Buffer status information for the interface.

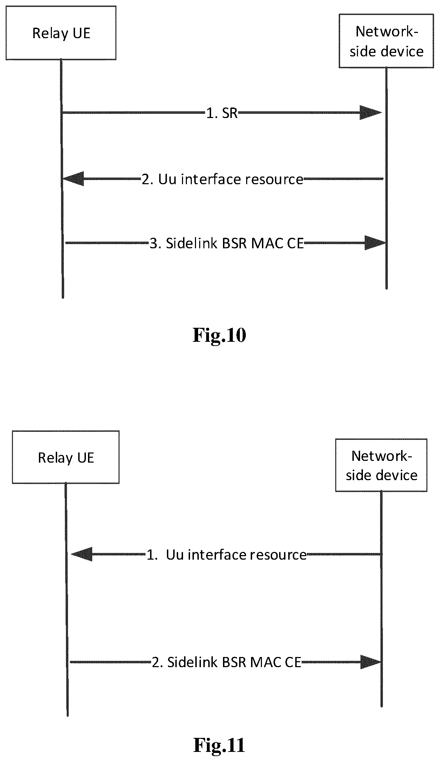

The following is a detailed description of an information transmission process provided by the embodiment of the present disclosure when the preset information is the Sidelink BSR MAC CE sent to the network-side device with reference to FIG. 10.

Step 1: the relay UE triggers SR.

The SR trigger of the relay UE may be triggered by the relay UE itself, or may be triggered by information sent by the remote UE to the relay UE. For example, if the remote UE has a Sidelink BSR trigger, it sends the Sidelink BSR to the relay UE through the sidelink interface between the remote UE and the relay UE. The relay UE receives the Sidelink BSR sent by the remote UE and triggers the Uu interface to initiate SR

Step 2: obtaining the Uu interface uplink resources from the network-side device.

Specifically, the network device may allocate the uplink resources of the Uu interface to the relay UE based on the SR request of the relay UE.

Step 3: the relay UE sends Sidelink BSR MAC CE to the network-side device.

The relay UE sends the Sidelink BSR MAC CE to the network-side device. The Sidelink BSR MAC CE can distinguish the buffer status information of the relay UE's own sidelink interface and the buffer status information of the remote UE sidelink interface. The specific method of distinguishing may be but is not limited to one of the following:
buffer status information of the relay UE sidelink interface and buffer status information of the remote UE sidelink interface are reported using different Sidelink BSR MAC CEs, the Sidelink BSR MAC CE can carry the UE identity information; specifically, the Sidelink BSR MAC CE needs to introduce the UE identity information., the UE identity information may be the UE ID or the index information of the UE;
buffer status information of the relay UE sidelink interface and buffer status information of the remote UE sidelink interface are reported using the same Sidelink BSR MAC CE, the Sidleink BSR MAC CE carries one or more UE identity information; specifically, the Sidleink BSR MAC CE needs to introduce the UE identity information, UE identity information may be UE ID or UE index information.

The following is a detailed description of another information transmission process provided by the embodiment of the present disclosure when the preset information is the Sidelink BSR MAC CE sent to the network-side device with reference to FIG. 11.

Step 1: the relay terminal receives Uu uplink interface resources from the network side device

Step 2: the relay UE sends Sidelink BSR MAC CE to the network-side device.

The relay UE sends the Sidelink BSR MAC CE to the network-side device. The Sidelink BSR MAC CE can distinguish the buffer status information of the relay UE's own sidelink interface and the buffer status information of the remote UE sidelink interface. The specific method of differentiation may be but is not limited to one of the following:
buffer status information of the relay UE sidelink interface and buffer status information of the remote UE sidelink interface are reported using different Sidelink BSR MAC CEs, Sidelink BSR MAC CE can carry the identity information of the UE; specifically, the Sidelink BSR MAC CE needs to be introduced into the UE identity information. The UE identity information can be the UE ID or the index information of the UE;
Buffer status information of the relay UE sidelink interface and buffer status information of the remote UE sidelink interface are reported using different Sidelink BSR MAC CEs. The Sidelink BSR MAC CE carries one or more UE identity information; specifically, the Sidelink BSR MAC CE needs to be introduced into the UE identity information. The UE identity information can be a UE identity (IDentity, ID) or UE index information.

Optionally, when the preset information includes the sidelink interface configured grant confirmation message transmitted through the Uu interface, the sidelink interface configured grant confirmation media access control unit is configured to send the sidelink interface configured grant confirmation to the network-side device;
the sidelink interface configured grant confirmation media access control unit includes indication information for indicating whether the sidelink interface configured grant confirmation message is for the relay UE or for the remote UE served by the relay UE.

In the embodiment of the present disclosure, if the preset information refers to the sidelink interface configured grant confirmation message transmitted through the Uu interface, enhancement needs to be performed. The specific enhancement mechanism can be used:

It is necessary to introduce a new MAC CE into the sidelink interface between the remote terminal and the relay terminal, that is, the sidelink interface configured grant confirmation media access control unit (Sidelink Configured Grant Confirmation MAC CE), which is used between the remote terminal and the relay terminal to carry the sidelink interface configured grant confirmation message; after receiving the new MAC CE from the remote terminal, the relay terminal needs to send a sidelink interface configured grant confirmation MAC CE to the network side device. The sidelink interface configured grant media access control unit sent through the Uu interface needs to contain indication information to indicate whether the sidelink interface configured grant confirmation media access control unit belongs to the relay terminal itself or the remote terminal served by the relay terminal.

Optionally, when the preset information includes the sidelink interface configured grant confirmation message transmitted through the Uu interface, the relay UE forwards the end-to-end RRC signaling between the remote UE and the network device, the End-to-end RRC signaling is configured to carry the configured grant confirmation message for the remote device.

In the embodiment of the present disclosure, if the preset information refers to the sidelink interface configured grant confirmation message transmitted through the Uu interface, enhancement needs to be performed. The specific enhancement mechanism can also be used:
An end-to-end RRC signaling needs to be introduced between the remote UE and the network-side device to carry the configured grant confirmation message.

Optionally, the indication information includes at least one of the following:
1-bit indication information, using the value of the indication information to identify whether the preset information is for the relay UE or the remote UE;
UE identity, which is an identity of a relay UE or an identity of the remote UE.

In the embodiment of the present disclosure, when indicating whether the SR is for the relay UE itself or for the remote UE served by the relay UE, or when indicating through the indication information carried in the scheduling signaling whether it is for the relay UE itself or for the remote UE served by the relay UE, or when the sidelink interface configured grant medium access control unit sent through the Uu interface needs to contain indication information for indicating whether the sidelink interface configured grant confirmation media access control unit is sent by the relay UE itself or by the remote UE served by the relay UE, the indication information may be but is not limited to one of the following:
N bits of indication information. The value of the indication information identifies whether the preset information (SR or scheduling signaling or sidelink interface configured grant confirmation message) is for the relay UE or the remote UE;
The UE identity includes the identity information of the relay UE and/or the identity information of the remote UE.

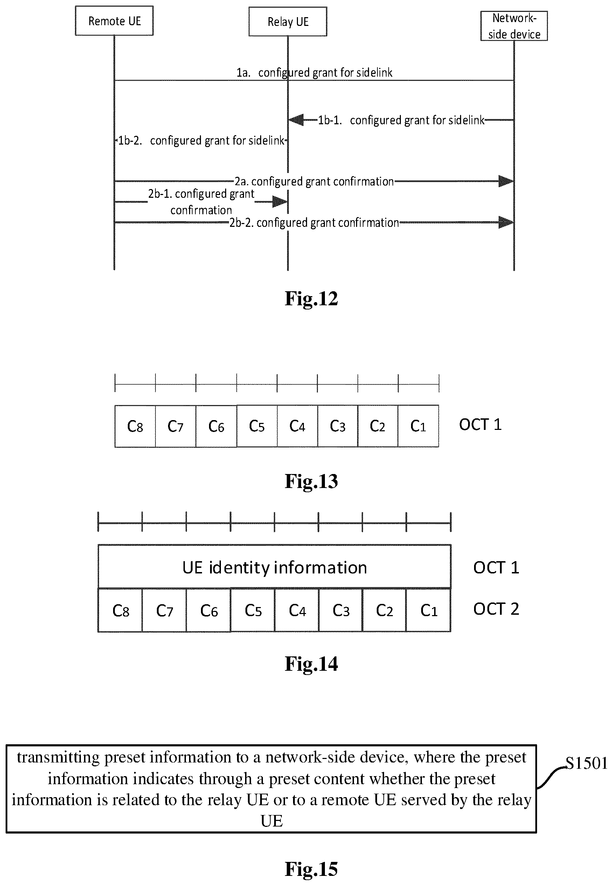

The information transmission process provided by the embodiment of the present disclosure will be described with reference to FIG. 12 when the preset information is a sidelink interface configured grant confirmation message.

Step 1: the network-side device sends the configured grant of the sidelink interface to the remote UE.

It should be noted that the step can be implemented through step 1a or step 1b-1 and step 1b-2.

For example, if you use type 1 configured grant (that is, the configured grant is only configured through end-to-end RRC signaling), you can use step 1a; if you use type 2 type of configured grant (that is, configured grant requires more than RRC signaling also needs to be activated through scheduling signaling), then step 1b-1 and step 1b-2 can be used.

If steps 1b-1 and 1b-2 are used, the scheduling signaling for the sidelink interface needs to be relayed through the relay UE, so the relay UE receives the scheduling signaling for the sidelink interface from the network-side device. If the scheduling The signaling is for the remote UE served by the relay UE, then the relay UE needs to forward the scheduling information to the remote UE through the sidelink interface. The specific signaling method is:
A new SCI is introduced into the sidelink interface. This new SCI is different from the sidelink interface SCI in related technologies, and is configured to allocate sidelink interface transmission resources to remote UEs. The new SCI includes at least one of: the identity information of the relay UE, the identity information of the remote UE, the remote UE sidelink interface data and / or the resources used to send control information;
High-level signaling is transmitted through the sidelink interface (such as PC5-RRC signaling or SL MAC CE).

Step 2: The remote UE sends a configured grant confirmation message to the network-side device.

It should be noted that step 2 can be implemented through step 2a or through steps 2b-1 and 2b-2.

If step 2a is used, the configured grant confirmation message is implemented through end-to-end RRC signaling between the remote UE and the network-side device.

If implemented using steps 2b-1 and 2b-2, the configured grant confirmation message needs to be relayed through the relay UE. In this case, the sidelink interface can be used to preconfigure the authorization confirmation media access control unit (Sidelink Configured Grant Confirmation MAC). CE). That is, a new MAC CE needs to be introduced into the sidelink interface between the remote UE and the relay UE, that is, the sidelink interface is pre-configured with authorization confirmation media access control unit (Sidelink Configured Grant Confirmation MAC CE), which is used at the remote end. The sidelink interface configured grant confirmation message is carried between the UE and the relay UE. And a new locale identity (Locale Identifier, LCID) needs to be introduced in the sidelink interface to identify the MAC CE.

Assuming that the sidelink interface supports 8 sets of preconfigured authorizations, an example of the newly introduced sidelink interface configured grant confirmation MAC CE format between the remote UE and the relay UE is shown in Fig. 13.

After the relay UE and the remote UE receive the MAC CE, they need to send the sidelink interface configured grant media access control unit to the network-side device. The sidelink interface configured grant media access control sent through the Uu interface The unit needs to contain indication information used to indicate whether the sidelink interface configured grant media access control unit is sent by the relay UE itself or by a remote UE served by the relay UE. The specific instruction information can be but is not limited to one of the following:
1 bit indication information, used to indicate whether the scheduling signaling is for the relay UE or the remote UE;
The sidelink configured grant media access control unit carries identity information of the relay UE and / or the remote UE.

Taking the sidelink interface pre-configured authorization media access control unit to carry UE identity information as an example, assuming that the UE identification uses 1 byte and the sidelink interface supports 8 sets of pre-configured authorization, then the MAC CE format can be as shown in Fig. 14, where the Ci identity The number is the confirmation message corresponding to the i set of preconfigured authorizations.

It should be noted that the information transmission method provided by the embodiment of the present disclosure can ensure that the network device in the uplink direction can correctly identify whether the information is for the relay UE or the remote server served by the relay UE after receiving the information from the relay UE. At the same time, it can ensure that the relay UE in the downlink direction can identify whether the scheduling information is for the relay UE itself or the remote UE after receiving the scheduling signaling from the network device, thereby ensuring that each piece of information can be processed correctly. Ensure that the entire communication system can work normally.

The UE in the present disclosure may be a device that provides voice and/or data connectivity to users, a handheld device with a wireless connection function, or other processing devices connected to a wireless modem, etc. In different systems, the names of UE equipment may also be different. For example, in a 5G system, the relay UE may be called User Equipment (UE). Wireless UE equipment can communicate with one or more core networks (Core Network, CN) via a Radio Access Network (RAN). The wireless UE equipment can be a mobile UE equipment, such as a mobile phone (or "cellular phone"). " telephone) and computers with mobile UE devices, which may be, for example, portable, pocket-sized, handheld, computer-built-in or vehicle-mounted mobile devices, which exchange speech and/or data with the radio access network. For example, Personal Communication Service (PCS) phones, cordless phones, Session Initiated Protocol (SIP) phones, Wireless Local Loop (WLL) stations, Personal Digital Assistants, PDA) and other equipment. Wireless UE equipment may also be called a system, a subscriber unit, a subscriber station, a mobile station, a mobile station, a remote station, or an access point., remote UE equipment (remote UE), access UE equipment (access UE), user UE equipment (user UE), user agent (user agent), user device (user device), are not limited in the embodiments of the present disclosure.
the present disclosure may be a base station, and the base station may include multiple cells that provide services for UEs. Depending on the specific application, a base station can also be called an access point, or it can be a device in the access network that communicates with wireless UE equipment through one or more sectors on the air interface, or it can be named by another name. The network-side device can exchange received air frames and Internet Protocol (IP) packets with each other and serve as a router between the wireless UE device and the rest of the access network, where the rest of the access network can include Internet Protocol (IP) communications network. The network-side device can also coordinate the attribute management of the air interface. For example, the network-side device involved in the embodiment of the present disclosure may be a network device (Base Transceiver Station) in the Global System for Mobile communications (GSM) or Code Division Multiple Access (CDMA). BTS), it can also be a network device (NodeB) in Wide-band Code Division Multiple Access (WCDMA), or it can be an evolutionary network in a long term evolution (LTE) system Equipment (evolutional Node B, eNB or e-NodeB), 5G base station (gNB) in the 5G network architecture (next generation system), or home evolved base station (Home evolved Node B, HeNB), relay node (relay node)), home base station (femto), pico base station (pico), etc., are not limited in the embodiments of the present disclosure. In some network structures, network devices may include centralized unit (CU) nodes and distributed unit (DU) nodes, and the centralized units and distributed units may also be arranged geographically separately.

The network-side device and the relay UE can each use one or more antennas for Multi-Input Multi-Output (MIMO) transmission. MIMO transmission can be Single User MIMO (Single User MIMO, SU-MIMO) or Multi-Input Multi-Output (MIMO). User MIMO (Multiple User MIMO, MU-MIMO). Depending on the shape and number of root antenna combinations, MIMO transmission can be 2D-MIMO, 3D-MIMO, FD-MIMO or massive-MIMO, or it can be diversity transmission, precoding transmission or beamforming transmission, etc.

As shown in Fig. 15, an embodiment of the present disclosure also provides an information transmission method, which is executed by a network-side device. The method includes:
transmitting preset information to a relay UE, where the preset information indicates through a preset content whether the preset information is related to the relay UE or to a remote UE served by the relay UE.

In the embodiment of the present disclosure, when transmitting preset information between the relay UE and the network-side device, it is able to indicate through a preset content whether the preset information is related to a relay UE or related to a remote UE served by a relay UE, so that the relay UE receives the scheduling information and can correctly identify whether the scheduling information is sent by the network-side device to the relay UE or the remote UE served by the relay UE, and distinguish whether the information received by the network-side device is from a relay UE or a remote UE.

Optionally, the preset information includes at least one of the following:
a Scheduling Request (SR);
a scheduling signaling of a Uu interface sent by the network-side device;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

Optionally, when the preset information includes the SR, the preset content includes at least one of the following:
SR resources used by the SR, where different SR resources are configured corresponding to the relay UE and the remote UE; or
SR carrying indication information, where the indication information is configured to indicate whether the preset information is intended for the relay UE or the remote UE, or the indication information is configured to indicate a UE identity for which the preset information is intended.

Optionally, different SR resources are configured for different remote UEs.

Optionally, the preset information includes the scheduling signaling of the Uu interface received from the network-side device, or includes the scheduling signaling of the sidelink interface received through the Uu interface, and the preset content includes at least one of the following:
a Radio Network Tempory Identity (RNTI) used for scheduling signaling; where the scheduling signaling for the relay UE and the scheduling signaling for the remote UE use different RNTIs respectively;
indication information carried in the scheduling information, where the indication information is configured to indicate whether the preset information is intended for the relay UE or the remote UE, or the indication information is configured to indicate the UE identity for which the preset information is intended.

Optionally, different RNTIs are used corresponding to the scheduling signalings of different remote UEs.

Optionally, the method further includes: configuring the RNTI used for the remote terminal in at least one of the following ways: through a RRC reconfiguration of the Uu interface, sending the RNTI configured for the remote UE to the remote UE;
sending the RNTI configured for the remote UE to the remote UE through an end-to-end RRC signaling, and the remote UE sending the RNTI to the relay UE through the sidelink interface.

Optionally, when the preset information includes the Sidelink BSR MAC CE sent to the network-side device, the preset content includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

Optionally, when the preset information includes the sidelink interface configured grant confirmation message transmitted through the Uu interface, the sidelink interface configured grant confirmation message is sent to the network-side device through a sidelink configured grant confirmation MAC CE;
where the sidelink interface configured grant confirmation MAC CE includes indication information for indicating whether the sidelink interface configured grant confirmation message is related to the relay UE or to the remote UE served by the relay UE.

Optionally, when the preset information includes a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

Optionally, the indication information includes at least one of the following:
N-bit indication information, where a value of the N-bit indication information is used to identify whether the preset information is related to the relay UE or the remote UE; where N is an integer greater than or equal to 1; or
a UE identity, which is an identity of the relay UE or an identity of the remote UE.

It should be noted that all descriptions of the information transmission method performed by the relay UE in the above embodiments are applicable to the embodiment of the information transmission method performed by the network-side device, and the same technical effect can be achieved.

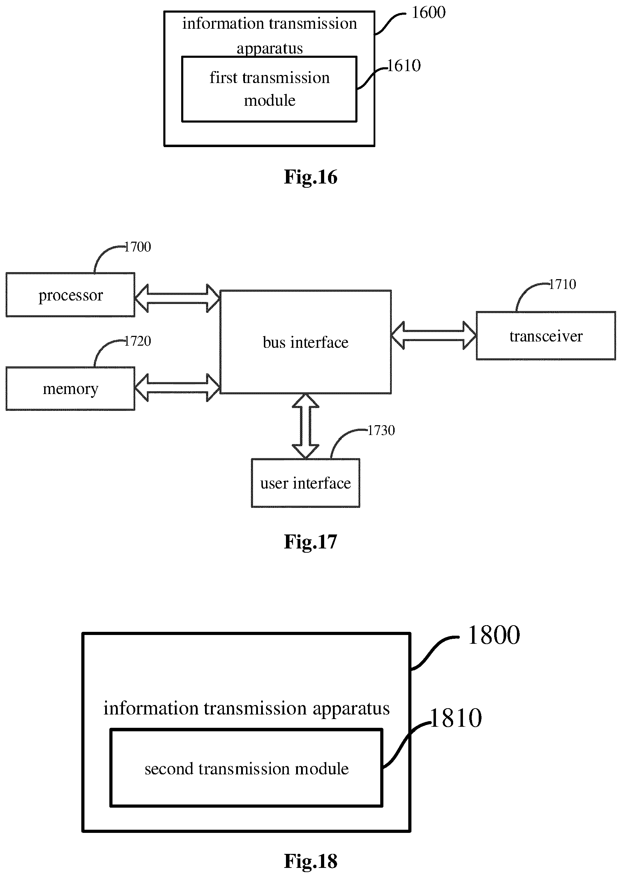

As shown in Fig. 16, an embodiment of the present disclosure provides an information transmission apparatus 1600, which is performed by a relay UE and includes:
a first transmission module 1610, configured to transmit preset information to a network-side device, where the preset information indicates through a preset content whether the preset information is related to the relay UE or to a remote UE served by the relay UE.

Optionally, the preset information includes at least one of the following:
a Scheduling Request (SR);
a scheduling signaling of a Uu interface sent by the network-side device ;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

Optionally, when the preset information includes the SR, the preset content includes at least one of the following:
SR resources used by the SR, where different SR resources are configured corresponding to the relay UE and the remote UE; or
SR carrying indication information, where the indication information is configured to indicate whether the preset information is intended for the relay UE or the remote UE, or the indication information is configured to indicate a UE identity for which the preset information is intended.

Optionally, different SR resources are configured for different remote UEs.

Optionally, a triggering condition of the SR includes one or more of the following:
the relay UE receives the SR sent by the remote UE through the sidelink interface; where the SR sent by the remote UE is sent through a dedicated control channel of the sidelink interface;
the relay UE receives the Sidelink BSR MAC CE message sent by the remote UE through the sidelink interface;
the relay UE receives resource allocation mode configuration information for the remote UE sidelink interface, and the resource allocation mode configuration information indicates that the remote UE uses a network-scheduled resource allocation mode on the sidelink interface; or
the relay UE receives a preset instruction sent by the remote UE, the preset instruction is configured to instruct the relay UE to send an SR.

Optionally, the preset instruction is through at least one of a sidelink interface radio resource control (PC5-RRC) signaling, a sidelink interface Sidelink MAC CE information and sidelink interface Sidelink control information (SCI).

Optionally, the preset information includes the scheduling signaling of the Uu interface received from the network-side device, or includes the scheduling signaling of the sidelink interface received through the Uu interface, and the preset content includes at least one of the following:
a Radio Network Tempory Identity (RNTI) used for scheduling signaling; where the scheduling signaling for the relay UE and the scheduling signaling for the remote UE use different RNTIs respectively;
indication information carried in the scheduling information, where the indication information is configured to indicate whether the preset information is intended for the relay UE or the remote UE, or the indication information is configured to indicate the UE identity for which the preset information is intended.

Optionally, when the preset content includes the RNTI used for scheduling signaling, different RNTIs are used corresponding to the scheduling signalings of different remote UEs.

Optionally, when the preset information includes the scheduling signaling of the sidelink interface transmitted through the Uu interface, after the relay device receives the scheduling signaling of the sidelink interface transmitted through the Uu interface, when the scheduling signaling of the sidelink interface is for the remote UE served by the relay UE, the first transmission module is configured to perform:
using at least one of the following methods to forward the received scheduling signaling to the remote UE through the sidelink interface:
using sidelink interface SCI;
using a high-level signaling of sidelink interface.

Optionally, the SCI includes at least one of the following:
an identity of the relay UE;
an identity of the remote UE; or
resources for sending a remote UE sidelink interface data and/or control information forwarded by the relay UE, which is allocated by the network-side device

Optionally, when the preset information includes the Sidelink BSR MAC CE sent to the network-side device, the preset content includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

Optionally, when the preset information includes the Sidelink BSR MAC CE sent to the network-side device, the method further includes:
obtaining a sidelink BSR sent by the remote UE through the sidelink interface with the relay UE;
according to the sidelink BSR, sending the SR to the network-side device through the Uu interface; and
after obtaining uplink resources sent by the network-side device, sending the Sidelink BSR MAC CE to the network-side device, and indicating through the preset content whether the Sidelink BSR MAC CE is related to the relay UE or to the remote UE served by the relay UE.

Optionally, when the preset information includes the sidelink interface configured grant confirmation message transmitted through the Uu interface, the sidelink interface configured grant confirmation message is sent to the network-side device through a sidelink configured grant confirmation MAC CE;
where the sidelink interface configured grant confirmation MAC CE includes indication information for indicating whether the sidelink interface configured grant confirmation message is related to the relay UE or to the remote UE served by the relay UE.

Optionally, when the preset information includes a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

Optionally, the indication information includes at least one of the following:
N-bit indication information, where a value of the N-bit indication information is used to identify whether the preset information is related to the relay UE or the remote UE; where N is an integer greater than or equal to 1; or
a UE identity, which is an identity of the relay UE or an identity of the remote UE.

It should be noted that this information transmission apparatus embodiment is a device that corresponds one-to-one with the above-mentioned method embodiment. All implementation methods in the above-mentioned method embodiment are suitable for the embodiment of the device and can achieve the same technical effect.

It should be noted that the division of units in the embodiment of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on this understanding, the technical solution of the present disclosure is essentially or contributes to the relevant technology, or all or part of the technical solution can be embodied in the form of a software product, and the computer software product is stored in a storage medium, It includes several instructions to cause a computer device (which can be a personal computer, a server, or a network device, etc.) or a processor to execute all or part of the steps of the methods described in various embodiments of the present disclosure. The aforementioned storage media include: U disk, mobile hard disk, Read-Only Memory (ROM), Random Access Memory (RAM), magnetic disk or optical disk and other media that can store program code..

As shown in Fig. 17, an embodiment of the present disclosure also provides a relay UE, including a processor 1700, a transceiver 1710, a memory 1720, and a program stored on the memory 1720 and executable on the processor 1700; the transceiver 1710 is connected to the processor 1700 and the memory 1720 through a bus interface. The processor 1700 performs the following process for reading the program in the memory:
transmitting preset information to a network-side device, where the preset information indicates through a preset content whether the preset information is related to the relay UE or to a remote UE served by the relay UE.
transceiver 1710 is configured to receive and transmit data under the control of processor 1700.

In FIG. 17, the bus architecture may include any number of interconnected buses and bridges, specifically one or more processors represented by processor 1700 and various circuits of the memory represented by memory 1720 are linked together. The bus architecture can also link together various other circuits such as peripherals, voltage regulators, and power management circuits, which are all well known in the art and therefore will not be described further herein. The bus interface provides the interface. The transceiver 1710 may be a plurality of components, including a transmitter and a receiver, providing a unit for communicating with various other devices over transmission media, including wireless channels, wired channels, optical cables, etc. medium. For different user equipment, the user interface 1730 can also be an interface capable of externally connecting internal and external required equipment. The connected equipment includes but is not limited to a keypad, a display, a speaker, a microphone, a joystick, etc.

The processor 1700 is responsible for managing the bus architecture and general processing, and the memory 1720 can store data used by the processor M00 when performing operations.

Optionally, the processor 1700 can be a central processing unit (Central Processing Unit, CPU), ASIC (Application Specific Integrated Circuit, application specific integrated circuit), FPGA (Field-Programmable Gate Array, field programmable gate array) or CPLD (Complex Programmable Logic Device), the processor can also adopt a multi-core architecture.

The processor executes any of the methods provided by the embodiments of the present disclosure in accordance with the obtained executable instructions by calling a computer program stored in the memory. The processor and memory can also be physically separated.

Further, when the processor 1700 executes the program of the information transmission method, the following steps are implemented:
Optionally, the preset information includes at least one of the following:
a Scheduling Request (SR);
a scheduling signaling of a Uu interface sent by the network-side device ;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

Optionally, when the preset information includes the SR, the preset content includes at least one of the following:
SR resources used by the SR, where different SR resources are configured corresponding to the relay UE and the remote UE; or
SR carrying indication information, where the indication information is configured to indicate whether the preset information is intended for the relay UE or the remote UE, or the indication information is configured to indicate a UE identity for which the preset information is intended.

Optionally, different SR resources are configured for different remote UEs.

Optionally, a triggering condition of the SR includes one or more of the following:
the relay UE receives the SR sent by the remote UE through the sidelink interface; where the SR sent by the remote UE is sent through a dedicated control channel of the sidelink interface;
the relay UE receives the Sidelink BSR MAC CE message sent by the remote UE through the sidelink interface;
the relay UE receives resource allocation mode configuration information for the remote UE sidelink interface, and the resource allocation mode configuration information indicates that the remote UE uses a network-scheduled resource allocation mode on the sidelink interface; or
the relay UE receives a preset instruction sent by the remote UE, the preset instruction is configured to instruct the relay UE to send an SR.

Optionally, the preset instruction is through at least one of a sidelink interface radio resource control (PC5-RRC) signaling, a sidelink interface Sidelink MAC CE information and sidelink interface Sidelink control information (SCI).

Optionally, the preset information includes the scheduling signaling of the Uu interface received from the network-side device, or includes the scheduling signaling of the sidelink interface received through the Uu interface, and the preset content includes at least one of the following:
a Radio Network Tempory Identity (RNTI) used for scheduling signaling; where the scheduling signaling for the relay UE and the scheduling signaling for the remote UE use different RNTIs respectively;
indication information carried in the scheduling information, where the indication information is configured to indicate whether the preset information is intended for the relay UE or the remote UE, or the indication information is configured to indicate the UE identity for which the preset information is intended.

Optionally, when the preset content includes the RNTI used for scheduling signaling, different RNTIs are used corresponding to the scheduling signalings of different remote UEs.

Optionally, when the preset information includes the scheduling signaling of the sidelink interface transmitted through the Uu interface, after the relay device receives the scheduling signaling of the sidelink interface transmitted through the Uu interface, when the scheduling signaling of the sidelink interface is for the remote UE served by the relay UE, the method further includes:
using at least one of the following methods to forward the received scheduling signaling to the remote UE through the sidelink interface:
using sidelink interface SCI;
using a high-level signaling of sidelink interface.
Optionally, the SCI includes at least one of the following:
   an identity of the relay UE;
   an identity of the remote UE; or
   resources for sending a remote UE sidelink interface data and/or control information forwarded by the relay UE, which is allocated by the network-side device

Optionally, when the preset information includes the Sidelink BSR MAC CE sent to the network-side device, the preset content includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

Optionally, when the preset information includes the Sidelink BSR MAC CE sent to the network-side device, the processor is further configured to perform:
obtaining a sidelink BSR sent by the remote UE through the sidelink interface with the relay UE;
according to the sidelink BSR, sending the SR to the network-side device through the Uu interface; and
after obtaining uplink resources sent by the network-side device, sending the Sidelink BSR MAC CE to the network-side device, and indicating through the preset content whether the Sidelink BSR MAC CE is related to the relay UE or to the remote UE served by the relay UE.

Optionally, when the preset information includes the sidelink interface configured grant confirmation message transmitted through the Uu interface, the sidelink interface configured grant confirmation message is sent to the network-side device through a sidelink configured grant confirmation MAC CE;
where the sidelink interface configured grant confirmation MAC CE includes indication information for indicating whether the sidelink interface configured grant confirmation message is related to the relay UE or to the remote UE served by the relay UE.

Optionally, when the preset information includes a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

Optionally, the indication information includes at least one of the following:
N-bit indication information, where a value of the N-bit indication information is used to identify whether the preset information is related to the relay UE or the remote UE; where N is an integer greater than or equal to 1; or
a UE identity, which is an identity of the relay UE or an identity of the remote UE.

It should be noted here that the above-mentioned relay UE provided by the embodiment of the present disclosure can implement all the method steps implemented by the above-mentioned method embodiment, and can achieve the same technical effect. The methods in this embodiment will no longer be implemented here. The same parts and beneficial effects will be described in detail.

Embodiments of the present disclosure also provide a computer-readable storage medium on which a computer program is stored, where when the computer program is executed by a processor, the steps of the information transmission method for the relay UE are implemented. The processor-readable storage medium may be any available media or data storage device that the processor can access, including but not limited to magnetic storage (such as floppy disks, hard disks, magnetic tapes, magneto-optical disks (Magneto-Optical Disk, MO), etc.), Optical storage (such as Compact Disk (CD), Digital Versatile Disc (DVD), Blu-ray Disc (BD), High-Definition Versatile Disc (HVD), etc.), and semiconductor memories (such as Read-Only Memory (ROM), Erasable Programmable Read-Only Memory (EPROM), Electrically Erasable Programmable Read Only Memory, EEPROM), non-volatile memory (NAND FLASH), solid state drive (Solid State Disk or Solid State Drive, SSD)), etc.

As shown in Fig. 18, an embodiment of the present disclosure provides an information transmission apparatus 1800, which is executed by a network-side device. The device includes:
a second transmission module 1810, configured to transmit preset information to a relay UE, where the preset information indicates through a preset content whether the preset information is related to the relay UE or to a remote UE served by the relay UE.

Optionally, the preset information includes at least one of the following:
a Scheduling Request (SR);
a scheduling signaling of a Uu interface sent by the network-side device ;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

Optionally, when the preset information includes the SR, the preset content includes at least one of the following:
SR resources used by the SR, where different SR resources are configured corresponding to the relay UE and the remote UE; or
SR carrying indication information, where the indication information is configured to indicate whether the preset information is intended for the relay UE or the remote UE, or the indication information is configured to indicate a UE identity for which the preset information is intended.

Optionally, different SR resources are configured for different remote UEs.

Optionally, the preset information includes the scheduling signaling of the Uu interface received from the network-side device, or includes the scheduling signaling of the sidelink interface received through the Uu interface, and the preset content includes at least one of the following:
a Radio Network Tempory Identity (RNTI) used for scheduling signaling; where the scheduling signaling for the relay UE and the scheduling signaling for the remote UE use different RNTIs respectively;
indication information carried in the scheduling information, where the indication information is configured to indicate whether the preset information is intended for the relay UE or the remote UE, or the indication information is configured to indicate the UE identity for which the preset information is intended.

Optionally, different RNTIs are used corresponding to the scheduling signalings of different remote UEs.

Optionally, the second transmission module is configured to configure RNTI configured by the remote UE through at least one of:
through a RRC reconfiguration of the Uu interface, sending the RNTI configured for the remote UE to the remote UE;
sending the RNTI configured for the remote UE to the remote UE through an end-to-end RRC signaling, and the remote UE sending the RNTI to the relay UE through the sidelink interface.

Optionally, when the preset information includes the Sidelink BSR MAC CE sent to the network-side device, the preset content includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

Optionally, when the preset information includes the sidelink interface configured grant confirmation message transmitted through the Uu interface, the sidelink interface configured grant confirmation message is obtained through a sidelink configured grant confirmation MAC CE;
where the sidelink interface configured grant confirmation MAC CE includes indication information for indicating whether the sidelink interface configured grant confirmation message is related to the relay UE or to the remote UE served by the relay UE.

Optionally, the preset information includes a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

Optionally, the indication information includes at least one of the following:
N-bit indication information, where a value of the N-bit indication information is used to identify whether the preset information is related to the relay UE or the remote UE; where N is an integer greater than or equal to 1; or
a UE identity, which is an identity of the relay UE or an identity of the remote UE.

It should be noted that the embodiments of the information transmission apparatus are devices that correspond one-to-one to the above method embodiments. All implementation methods in the above method embodiments are suitable for the embodiments of the network equipment and can also achieve the same technical effect.

It should be noted that the division of units in the embodiment of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on this understanding, the technical solution of the present disclosure is essentially or contributes to the relevant technology, or all or part of the technical solution can be embodied in the form of a software product, and the computer software product is stored in a storage medium, It includes several instructions to cause a computer device (which can be a personal computer, a server, or a network device, etc.) or a processor to execute all or part of the steps of the methods described in various embodiments of the present disclosure. The aforementioned storage media include: U disk, mobile hard disk, read-only memory (ROM), random access memory (RAM), magnetic disk or optical disk and other media that can store program code..

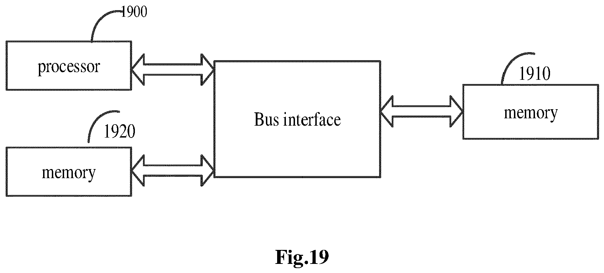

As shown in Fig. 19, the embodiment of the present disclosure also provides a network-side device, including a processor 1900, a transceiver 1910, a memory 1920, and a program stored on the memory 1920 and capable of running on the processor 1900; the transceiver 1910 is connected to the processor 1900 and the memory 1920 through a bus interface. The processor 1900 performs the following process for reading the program in the memory:
preset information is transmitted to and from the relay UE, where the preset information indicates through a preset content whether the preset information is related to the relay UE or to the remote UE served by the relay UE.
transceiver 1910 is configured to receive and transmit data under the control of processor 1900.

In FIG. 19, the bus architecture may include any number of interconnected buses and bridges, specifically one or more processors represented by processor 1900 and various circuits of the memory represented by memory 1920 are linked together. The bus architecture can also link together various other circuits such as peripherals, voltage regulators, and power management circuits, which are all well known in the art and therefore will not be described further herein. The bus interface provides the interface. The transceiver 1910 may be multiple components, including a transmitter and a receiver, providing a unit for communicating with various other devices over transmission media, including wireless channels, wired channels, optical cables, and other transmission media. The processor 1900 is responsible for managing the bus architecture and general processing, and the memory 1900 can store data used by the processor 1900 when performing operations.

The processor 1900 may be a central processing unit (CPU), an application specific integrated circuit (Application Specific Integrated Circuit, ASIC), a field programmable gate array (Field-Programmable Gate Array, FPGA), or a complex programmable logic device (Complex Programmable Logic Device, CPLD), the processor can also adopt a multi-core architecture.

Further, when the processor 1900 executes the program of the information transmission method, the following steps are implemented:
Optionally, the preset information includes at least one of the following:
a Scheduling Request (SR);
a scheduling signaling of a Uu interface sent by the network-side device ;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

Optionally, when the preset information includes the SR, the preset content includes at least one of the following:
SR resources used by the SR, where different SR resources are configured corresponding to the relay UE and the remote UE; or
SR carrying indication information, where the indication information is configured to indicate whether the preset information is intended for the relay UE or the remote UE, or the indication information is configured to indicate a UE identity for which the preset information is intended.

Optionally, different SR resources are configured for different remote UEs.

Optionally, the preset information includes the scheduling signaling of the Uu interface received from the network-side device, or includes the scheduling signaling of the sidelink interface received through the Uu interface, and the preset content includes at least one of the following:
a Radio Network Tempory Identity (RNTI) used for scheduling signaling; where the scheduling signaling for the relay UE and the scheduling signaling for the remote UE use different RNTIs respectively;
indication information carried in the scheduling information, where the indication information is configured to indicate whether the preset information is intended for the relay UE or the remote UE, or the indication information is configured to indicate the UE identity for which the preset information is intended.

Optionally, different RNTIs are used corresponding to the scheduling signalings of different remote UEs.

Optionally, the second transmission module is configured to configure RNTI configured by the remote UE through at least one of:
through a RRC reconfiguration of the Uu interface, sending the RNTI configured for the remote UE to the remote UE;
sending the RNTI configured for the remote UE to the remote UE through an end-to-end RRC signaling, and the remote UE sending the RNTI to the relay UE through the sidelink interface.

Optionally, when the preset information includes the Sidelink BSR MAC CE sent to the network-side device, the preset content includes at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

Optionally, when the preset information includes the sidelink interface configured grant confirmation message transmitted through the Uu interface, the sidelink interface configured grant confirmation message is obtained through a sidelink configured grant confirmation MAC CE;
where the sidelink interface configured grant confirmation MAC CE includes indication information for indicating whether the sidelink interface configured grant confirmation message is related to the relay UE or to the remote UE served by the relay UE.

Optionally, the preset information includes a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

Optionally, the indication information includes at least one of the following:
N-bit indication information, where a value of the N-bit indication information is used to identify whether the preset information is related to the relay UE or the remote UE; where N is an integer greater than or equal to 1; or
a UE identity, which is an identity of the relay UE or an identity of the remote UE.

It should be noted here that the above-mentioned network-side device provided by the embodiments of the present disclosure can implement all the method steps implemented by the above-mentioned method embodiments, and can achieve the same technical effect. The methods in this embodiment will no longer be implemented here. The same parts and beneficial effects will be described in detail.

Embodiments of the present disclosure also provide a computer-readable storage medium on which a computer program is stored, where when the computer program is executed by a processor, the steps of the information transmission method corresponding to the relay UE are implemented, or the corresponding network-side device is implemented The steps of the information transmission method. The processor-readable storage medium may be any available media or data storage device that the processor can access, including but not limited to magnetic storage (such as floppy disks, hard disks, magnetic tapes, magneto-optical disks (magneto-optical, MO), etc.), Optical storage (such as Compact Disk (CD), Digital Versatile Disc (DVD), Blu-ray Disc (BD), High-Definition Versatile Disc (HVD), etc.), and semiconductor memories (such as ROM, Erasable Programmable Read-Only Memory (EPROM), Electrically Erasable Programmable Read-Only Memory (EEPROM), non-volatile memory (NAND FLASH), solid state drive (Solid State Disk (SSD)), etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) having computer-usable program code embodied therein.

The present disclosure is described with reference to flowchart illustrations and/or block diagrams of methods, apparatus (systems), and computer program products according to embodiments of the disclosure. It will be understood that each process and/or block in the flowchart illustrations and/or block diagrams, and combinations of processes and/or blocks in the flowchart illustrations and/or block diagrams, can be implemented by computer-executable instructions. These computer-executable instructions may be provided to a processor of a general-purpose computer, special-purpose computer, embedded processor, or other programmable data processing device to produce a machine such that the instructions executed by the processor of the computer or other programmable data processing device produce Means for performing the functions specified in a process or processes of a flowchart and/or a block or blocks of a block diagram.

These processor-executable instructions may also be stored in a processor-readable memory that causes a computer or other programmable data processing apparatus to operate in a particular manner, such that the generation of instructions stored in the processor-readable memory includes the manufacture of the instruction means product, the instruction device implements the function specified in one process or multiple processes in the flowchart and/or one block or multiple blocks in the block diagram.

These processor-executable instructions may also be loaded onto a computer or other programmable data processing device, causing a series of operational steps to be performed on the computer or other programmable device to produce computer-implemented processing, thereby causing the computer or other programmable device to The instructions that are executed provide steps for implementing the functions specified in a process or processes of the flowchart diagrams and/or a block or blocks of the block diagrams.

It should be noted that it should be understood that the division of each module above is only a division of logical functions. In actual implementation, it can be fully or partially integrated into a physical entity, or it can also be physically separated. And these modules can all be implemented in the form of software calling through processing components; they can also all be implemented in the form of hardware; some modules can also be implemented in the form of software calling through processing components, and some modules can be implemented in the form of hardware. For example, the determination module can be a separate processing element, or can be integrated into a chip of the above device. In addition, it can also be stored in the memory of the above device in the form of program code, and can be processed by a certain processing element of the above device. Call and execute the functions of the above identified modules. The implementation of other modules is similar. In addition, all or part of these modules can be integrated together or implemented independently. The processing element described here may be an integrated circuit with signal processing capabilities. During the implementation process, each step of the above method or each of the above modules can be completed by instructions in the form of hardware integrated logic circuits or software in the processor element.

For example, each module, unit, sub-unit or sub-module may be one or more integrated circuits configured to implement the above method, such as: one or more Application Specific Integrated Circuits (ASICs), or one or Multiple microprocessors (digital signal processor, DSP), or one or more field programmable gate arrays (Field Programmable Gate Array, FPGA), etc. For another example, when one of the above modules is implemented in the form of a processing element scheduler code, the processing element can be a general-purpose processor, such as a central processing unit (Central Processing Unit, CPU) or other processors that can call the program code. For another example, these modules can be integrated together and implemented in the form of a system-on-a-chip (SOC).

The present disclosure are used to distinguish similar objects and are not necessarily used to describe a specific order or sequence. It is to be understood that the data so used are interchangeable under appropriate circumstances so that the embodiments of the disclosure described herein may be implemented, for example, in sequences other than those illustrated or described herein. In addition, the terms "including" and "having" and any variations thereof are intended to cover non- exclusive inclusions, e.g., a process, method, system, product, or apparatus that encompasses a series of steps or units and need not be limited to those explicitly listed. Those steps or elements may instead include other steps or elements not expressly listed or inherent to the process, method, product or apparatus. In addition, the use of "and/or" in the description and claims indicates at least one of the connected objects, such as A and/or B and/or C, indicating the inclusion of A alone, B alone, C alone, and A and B. All exist, both B and C exist, both A and C exist, and there are 7 situations in which A, B, and C all exist. Similarly, the use of "at least one of A and B" in this specification and in the claims should be understood to mean "A alone, B alone, or both A and B present."

Obviously, those skilled in the art can make various changes and modifications to the present disclosure without departing from the spirit and scope of the disclosure. In this way, if these modifications and variations of the present disclosure fall within the scope of the claims of the present disclosure and equivalent technologies, the present disclosure is also intended to include these modifications and variations.

## Claims

1. An information transmission method, performed by a relay user equipment (UE) and comprising:
transmitting preset information to a network-side device, wherein the preset information indicates through a preset content whether the preset information is related to the relay UE or to a remote UE served by the relay UE.

2. The information transmission method according to claim 1, wherein the preset information comprises at least one of the following:
a Scheduling Request (SR);
a scheduling signaling of a Uu interface sent by the network-side device;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

3. The information transmission method according to claim 2, wherein when the preset information comprises the SR, the preset content comprises at least one of the following:
SR resources used by the SR, wherein different SR resources are configured corresponding to the relay UE and the remote UE; or
SR carrying indication information, wherein the indication information is configured to indicate whether the preset information is intended for the relay UE or the remote UE, or the indication information is configured to indicate a UE identity for which the preset information is intended.

4. The information transmission method according to claim 3, wherein different SR resources are configured for different remote UEs.

5. The information transmission method according to claim 2 or 3, wherein a triggering condition of the SR comprises one or more of the following:
the relay UE receives the SR sent by the remote UE through the sidelink interface; wherein the SR sent by the remote UE is sent through a dedicated control channel of the sidelink interface;
the relay UE receives the Sidelink BSR MAC CE message sent by the remote UE through the sidelink interface;
the relay UE receives resource allocation mode configuration information for the remote UE sidelink interface, and the resource allocation mode configuration information indicates that the remote UE uses a network-scheduled resource allocation mode on the sidelink interface; or
the relay UE receives a preset instruction sent by the remote UE, the preset instruction is configured to instruct the relay UE to send an SR.

6. The information transmission method according to claim 5, wherein the preset instruction is through at least one of a sidelink interface radio resource control (PC5-RRC) signaling, a sidelink interface Sidelink MAC CE information and sidelink interface Sidelink control information (SCI).

7. The information transmission method according to claim 2, wherein the preset information comprises the scheduling signaling of the Uu interface received from the network-side device, or comprises the scheduling signaling of the sidelink interface received through the Uu interface, and the preset content comprises at least one of the following:
a Radio Network Tempory Identity (RNTI) used for scheduling signaling; wherein the scheduling signaling for the relay UE and the scheduling signaling for the remote UE use different RNTIs respectively;
indication information carried in the scheduling information, wherein the indication information is configured to indicate whether the preset information is intended for the relay UE or the remote UE, or the indication information is configured to indicate the UE identity for which the preset information is intended.

8. The information transmission method according to claim 7, wherein when the preset content comprises the RNTI used for scheduling signaling, different RNTIs are used corresponding to the scheduling signalings of different remote UEs.

9. The information transmission method according to claim 7, wherein when the preset information comprises the scheduling signaling of the sidelink interface transmitted through the Uu interface, after the relay device receives the scheduling signaling of the sidelink interface transmitted through the Uu interface, when the scheduling signaling of the sidelink interface is for the remote UE served by the relay UE, the method further comprises:
using at least one of the following methods to forward the received scheduling signaling to the remote UE through the sidelink interface:
using sidelink interface SCI;
using a high-level signaling of sidelink interface.

10. The information transmission method according to claim 9, wherein the SCI comprises at least one of the following:
an identity of the relay UE;
an identity of the remote UE; or
resources for sending a remote UE sidelink interface data and/or control information forwarded by the relay UE, which is allocated by the network-side device.

11. The information transmission method according to claim 2, wherein when the preset information comprises the Sidelink BSR MAC CE sent to the network-side device, the preset content comprises at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

12. The information transmission method according to claim 2, wherein when the preset information comprises the Sidelink BSR MAC CE sent to the network-side device, the method further comprises:
obtaining a sidelink BSR sent by the remote UE through the sidelink interface with the relay UE;
according to the sidelink BSR, sending the SR to the network-side device through the Uu interface; and
after obtaining uplink resources sent by the network-side device, sending the Sidelink BSR MAC CE to the network-side device, and indicating through the preset content whether the Sidelink BSR MAC CE is related to the relay UE or to the remote UE served by the relay UE.

13. The information transmission method according to claim 2, wherein when the preset information comprises the sidelink interface configured grant confirmation message transmitted through the Uu interface, the sidelink interface configured grant confirmation message is sent to the network-side device through a sidelink configured grant confirmation MAC CE;
wherein the sidelink interface configured grant confirmation MAC CE comprises indication information for indicating whether the sidelink interface configured grant confirmation message is related to the relay UE or to the remote UE served by the relay UE.

14. The information transmission method according to claim 2, wherein when the preset information comprises a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

15. The information transmission method according to any one of claims 3, 7 and 13, wherein the indication information comprises at least one of the following:
N-bit indication information, wherein a value of the N-bit indication information is used to identify whether the preset information is related to the relay UE or the remote UE; wherein N is an integer greater than or equal to 1; or
a UE identity, which is an identity of the relay UE or an identity of the remote UE.

16. An information transmission method, performed by a network-side device and comprising:
transmitting preset information to a relay UE, wherein the preset information indicates through a preset content whether the preset information is related to the relay UE or to a remote UE served by the relay UE.

17. The information transmission method according to claim 16, wherein the preset information comprises at least one of the following:
a Scheduling Request (SR);
a scheduling signaling of a Uu interface sent by the network-side device;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

18. The information transmission method according to claim 17, wherein when the preset information comprises the SR, the preset content comprises at least one of the following:
SR resources used by the SR, wherein different SR resources are configured corresponding to the relay UE and the remote UE; or
SR carrying indication information, wherein the indication information is configured to indicate whether the preset information is intended for the relay UE or the remote UE, or the indication information is configured to indicate a UE identity for which the preset information is intended.

19. The information transmission method according to claim 17, wherein the preset information comprises the scheduling signaling of the Uu interface received from the network-side device, or comprises the scheduling signaling of the sidelink interface received through the Uu interface, and the preset content comprises at least one of the following:
a Radio Network Tempory Identity (RNTI) used for scheduling signaling; wherein the scheduling signaling for the relay UE and the scheduling signaling for the remote UE use different RNTIs respectively;
indication information carried in the scheduling information, wherein the indication information is configured to indicate whether the preset information is intended for the relay UE or the remote UE, or the indication information is configured to indicate the UE identity for which the preset information is intended.

20. The information transmission method according to claim 19, further comprising configuring the RNTI used by the remote UE in at least one of the following methods:
through a RRC reconfiguration of the Uu interface, sending the RNTI configured for the remote UE to the remote UE;
sending the RNTI configured for the remote UE to the remote UE through an end-to-end RRC signaling, and the remote UE sending the RNTI to the relay UE through the sidelink interface.

21. The information transmission method according to claim 17, wherein when the preset information comprises the Sidelink BSR MAC CE sent to the network-side device, the preset content comprises at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

22. The information transmission method according to claim 17, wherein when the preset information comprises the sidelink interface configured grant confirmation message transmitted through the Uu interface, the sidelink interface configured grant confirmation message is obtained through a sidelink configured grant confirmation MAC CE;
wherein the sidelink interface configured grant confirmation MAC CE comprises indication information for indicating whether the sidelink interface configured grant confirmation message is related to the relay UE or to the remote UE served by the relay UE.

23. The information transmission method according to claim 17, wherein when the preset information comprises a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

24. A relay UE, comprising a memory, a transceiver, and a processor; wherein
a memory is configured to store a computer program; a transceiver is configured to transmit and receive data under a control of the processor; and the processor is configured to read the computer program in the memory to perform:
transmitting preset information to a network-side device, wherein the preset information indicates through a preset content whether the preset information is related to the relay UE or to a remote UE served by the relay UE.

25. The relay UE according to claim 24, wherein the preset information comprises at least one of the following:
a Scheduling Request (SR);
a scheduling signaling of a Uu interface sent by the network-side device;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

26. The relay UE according to claim 25, wherein when the preset information comprises the SR, the preset content comprises at least one of the following:
SR resources used by the SR, wherein different SR resources are configured corresponding to the relay UE and the remote UE; or
SR carrying indication information, wherein the indication information is configured to indicate whether the preset information is intended for the relay UE or the remote UE, or the indication information is configured to indicate a UE identity for which the preset information is intended.

27. The relay UE according to claim 26, wherein different SR resources are configured for different remote UEs.

28. The relay UE according to claim 25 or 26, wherein a triggering condition of the SR comprises one or more of the following:
the relay UE receives the SR sent by the remote UE through the sidelink interface; wherein the SR sent by the remote UE is sent through a dedicated control channel of the sidelink interface;
the relay UE receives the Sidelink BSR MAC CE message sent by the remote UE through the sidelink interface;
the relay UE receives resource allocation mode configuration information for the remote UE sidelink interface, and the resource allocation mode configuration information indicates that the remote UE uses a network-scheduled resource allocation mode on the sidelink interface; or
the relay UE receives a preset instruction sent by the remote UE, the preset instruction is configured to instruct the relay UE to send an SR.

29. The relay UE according to claim 28, wherein the preset instruction is through at least one of a sidelink interface radio resource control (PC5-RRC) signaling, a sidelink interface Sidelink MAC CE information and sidelink interface Sidelink control information (SCI).

30. The relay UE according to claim 25, wherein the preset information comprises the scheduling signaling of the Uu interface received from the network-side device, or comprises the scheduling signaling of the sidelink interface received through the Uu interface, and the preset content comprises at least one of the following:
a Radio Network Tempory Identity (RNTI) used for scheduling signaling; wherein the scheduling signaling for the relay UE and the scheduling signaling for the remote UE use different RNTIs respectively;
indication information carried in the scheduling information, wherein the indication information is configured to indicate whether the preset information is intended for the relay UE or the remote UE, or the indication information is configured to indicate the UE identity for which the preset information is intended.

31. The relay UE according to claim 30, wherein when the preset content comprises the RNTI used for scheduling signaling, different RNTIs are used corresponding to the scheduling signalings of different remote UEs.

32. The relay UE according to claim 30, wherein when the preset information comprises the scheduling signaling of the sidelink interface transmitted through the Uu interface, after the relay device receives the scheduling signaling of the sidelink interface transmitted through the Uu interface, when the scheduling signaling of the sidelink interface is for the remote UE served by the relay UE, the processor is configured to read the computer program in the memory to perform:
using at least one of the following methods to forward the received scheduling signaling to the remote UE through the sidelink interface:
using sidelink interface SCI;
using a high-level signaling of sidelink interface.

33. The relay UE according to claim 32, wherein the SCI comprises at least one of the following:
an identity of the relay UE;
an identity of the remote UE; or
resources for sending a remote UE sidelink interface data and/or control information forwarded by the relay UE, which is allocated by the network-side device

34. The relay UE according to claim 25, wherein when the preset information comprises the Sidelink BSR MAC CE sent to the network-side device, the preset content comprises at least one of the following:
buffer status information of the relay UE sidelink interface and buffer status information of the remote UE sidelink interface are reported using different Sidelink BSR MAC CEs, and the reported Sidelink BSR MAC CE payload or Sidelink BSR MAC CE sub-header carries a UE identity corresponding to the buffer status information;
buffer status information of the relay UE sidelink interface and buffer status information of the remote UE sidelink interface are reported using the same Sidelink BSR MAC CE, and the Sidelink BSR MAC CE carries a UE identity corresponding to the buffer status information.

35. The relay UE according to claim 25, wherein when the preset information comprises the Sidelink BSR MAC CE sent to the network-side device, the method further comprises:
obtaining a sidelink BSR sent by the remote UE through the sidelink interface with the relay UE;
according to the sidelink BSR, sending the SR to the network-side device through the Uu interface; and
after obtaining uplink resources sent by the network-side device, sending the Sidelink BSR MAC CE to the network-side device, and indicating through the preset content whether the Sidelink BSR MAC CE is related to the relay UE or to the remote UE served by the relay UE.

36. The relay UE according to claim 25, wherein when the preset information comprises the sidelink interface configured grant confirmation message transmitted through the Uu interface, the sidelink interface configured grant confirmation message is sent to the network-side device through a sidelink configured grant confirmation MAC CE;
wherein the sidelink interface configured grant confirmation MAC CE comprises indication information for indicating whether the sidelink interface configured grant confirmation message is related to the relay UE or to the remote UE served by the relay UE.

37. The relay UE according to claim 25, wherein when the preset information comprises a sidelink interface configured grant confirmation message transmitted through the Uu interface, the relay UE forwards an end-to-end RRC signaling between the remote UE and the network-side device, the end-to-end RRC signaling is configured to carry the configured grant confirmation message for the remote device.

38. The relay UE according to any one of claims 26, 30 and 36, wherein the indication information comprises at least one of the following:
N-bit indication information, wherein a value of the N-bit indication information is used to identify whether the preset information is related to the relay UE or the remote UE; wherein N is an integer greater than or equal to 1; or
a UE identity, which is an identity of the relay UE or an identity of the remote UE.

39. A network-side device, comprising a memory, a transceiver, and a processor; wherein a memory is configured to store a computer program; a transceiver is configured to transmit and receive data under a control of the processor; and the processor is configured to read the computer program in the memory to perform:
transmitting preset information to a relay UE, wherein the preset information indicates through a preset content whether the preset information is related to the relay UE or to a remote UE served by the relay UE.

40. The network-side device according to claim 39, wherein the preset information comprises at least one of the following:
a Scheduling Request (SR);
a scheduling signaling of a Uu interface sent by the network-side device;
a Sidelink Buffer Status Reporting Medium Access Control Control Element (Sidelink BSR MAC CE);
a scheduling signaling of a sidelink interface transmitted through a Uu interface; or
a sidelink interface configured grant confirmation message transmitted through a Uu interface.

41. An information transmission apparatus, performed by a relay UE, comprising:
a first transmission module, configured to transmit preset information to a network-side device, wherein the preset information indicates through a preset content whether the preset information is related to the relay UE or to a remote UE served by the relay UE.

42. An information transmission apparatus, performed by a network-side device, comprising:
a second transmission module, configured to transmit preset information to a relay UE, wherein the preset information indicates through a preset content whether the preset information is related to the relay UE or to a remote UE served by the relay UE.

43. A processor-readable storage medium, wherein the processor-readable storage medium stores a computer program, the computer program is configured to cause the processor to perform the information transmission method according to any one of claims 1 to 15 or to cause the processor to perform the information transmission method according to any one of claims 16 to 23.
